(19) Europäisches Patentamt
European Patent Office
Office européen des brevets

(11) **EP 3 511 680 B1**

(12) **EUROPÄISCHE PATENTSCHRIFT**

(45) Veröffentlichungstag und Bekanntmachung des Hinweises auf die Patenterteilung:
**19.04.2023   Patentblatt 2023/16**

(21) Anmeldenummer: **19150886.0**

(22) Anmeldetag: **09.01.2019**

(51) Internationale Patentklassifikation (IPC):
**G01D 5/245** *(2006.01)*      **G01D 5/347** *(2006.01)*

(52) Gemeinsame Patentklassifikation (CPC):
**G01D 5/2455; G01D 5/34792;** G01D 5/34746;
G01D 2205/90

(54) **POSITIONSMESSEINRICHTUNG**

POSITION MEASURING DEVICE

DISPOSITIF DE MESURE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.01.2018   DE 102018200449**

(43) Veröffentlichungstag der Anmeldung:
**17.07.2019   Patentblatt 2019/29**

(73) Patentinhaber: **Dr. Johannes Heidenhain GmbH 83301 Traunreut (DE)**

(72) Erfinder:
- **WEIS, Dr. Stefan**
  **83374 Traunwalchen (DE)**
- **FRESE, Dr. Daniel**
  **83278 Traunstein (DE)**
- **HOLZAPFEL, Wolfgang**
  **83119 Obing (DE)**

(56) Entgegenhaltungen:
EP-A2- 2 182 330      DE-A1-102010 045 355
US-A1- 2012 262 731      US-A1- 2017 023 383

EP 3 511 680 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

GEBIET DER TECHNIK

Die vorliegende Erfindung betrifft eine Positionsmesseinrichtung, die zur hochgenauen absoluten Positionsbestimmung geeignet ist.

STAND DER TECHNIK

Zur absoluten Positionsbestimmung sind unterschiedliche Varianten von Positionsmesseinrichtungen bekannt. So existieren zum einen Systeme, die auf Seiten des abgetasteten Maßstabs mehrere parallel angeordnete Spuren mit verschiedenen Messteilungen aufweisen, etwa eine Spur mit einer absolutcodierten Messteilung sowie ein oder mehrere weitere Spuren mit inkrementellen Messteilungen. Über die Verrechnung der bei der Abtastung gewonnenen grobauflösenden Absolutpositionsinformation und der hochauflösenden Inkrementalinformation kann eine exakte absolute Positionsbestimmung erfolgen.

Beispielhaft für solche Mehrspursysteme sei an dieser Stelle auf die EP 2 182 330 A2 verwiesen. Diese Druckschrift offenbart eine Positionsmesseinrichtung, deren Maßstab entlang der Messrichtung eine erste Spur mit einer periodischen Struktur zur Erzeugung von Inkrementalsignalen aufweist. Senkrecht zur Messrichtung verschoben ist eine zweite Spur mit einer Absolutpositionscodierung angeordnet. Zur Abtastung des Maßstabs sind auf Seiten der Abtasteinheit separate Sensoreinrichtungen bzw. Detektoranordnungen für die periodische Struktur und die Absolutpositionscodierung vorgesehen, wobei diese nicht im Detail beschrieben werden. Nachteilig an diesem System ist zum einen die geringe Toleranz bei Relativverschiebungen von Maßstab und Abtasteinheit senkrecht zur Messrichtung. Zum anderen liegt auch nur eine geringe Toleranz bzgl. einer eventuellen Relativverdrehung von Maßstab und Abtasteinheit um eine Achse senkrecht zur Messteilungsebene vor.

Neben derartigen Mehrspursystemen gibt es ferner Positionsmesseinrichtungen, die auf dem Maßstab lediglich eine einzige Spur mit einer Messteilung aufweisen, aus deren Abtastung sowohl eine Absolutpositionsinformation als auch eine Inkrementalinformation gewonnen werden kann. Diese, nachfolgend auch als Einspursysteme bezeichneten Positionsmesseinrichtungen besitzen gegenüber den Mehrspursystemen Vorteile im Hinblick auf eine kompaktere Bauweise sowie größere Anbau- und Betriebstoleranzen. Hierbei existieren derartige Einspursysteme für lineare als auch für rotatorische Messaufgaben; ferner sind entsprechende Systeme auch in Verbindung mit unterschiedlichsten Abtastprinzipien bekannt geworden, also für optische, magnetische, induktive und kapazitive Abtastungen.

Beispielhaft für solche Einspursysteme sei etwa die bekannte Vorrichtung aus der US 8,698,892 B2 angeführt. Der Maßstab des in Figur 4 dieser Druckschrift gezeigten Ausführungsbeispiels weist periodisch angeordnete Strukturelemente entlang der Messrichtung auf, senkrecht hierzu wird über die Formgebung der Strukturelemente eine Absolutpositionsinformation codiert. Zur Abtastung der Messteilung ist eine Kamera vorgesehen. Als nachteilig an diesem System sind insbesondere dessen geringe Verschiebetoleranzen senkrecht zur Messrichtung sowie die erforderliche aufwändige Bildverarbeitung anzuführen.

Ein weiteres Einspursystem ist ferner aus der DE 10 2010 045 355 A1 bekannt. Dieses weist maßstabsseitig eine optisch abtastbare Codierungsspur mit einer reflektierenden oder transmittierenden Gitteranordnung auf. Die Gitteranordnung umfasst mehrere unterschiedlich ausgebildete Gitterbereiche, die aneinandergereiht längs einer Abtastlinie angeordnet sind und sich durch wenigstens eine Gittereigenschaft unterscheiden. Nachteilig an dieser Vorrichtung ist, dass damit lediglich eine relativ grob aufgelöste Absolutpositionsmessung möglich ist. Aufgrund des nur sehr kleinen Abtastfelds ist die Abtastung zudem sehr verschmutzungsanfällig.

ZUSAMMENFASSUNG DER ERFINDUNG

Der vorliegenden Erfindung liegt die Aufgabe zugrunde, eine Positionsmesseinrichtung zur hochauflösenden absoluten Positionsbestimmung anzugeben, die große Anbau- und Betriebstoleranzen besitzt und bei der eine möglichst störungsfreie Signalerzeugung mit einer hohen Verschmutzungsunempfindlichkeit gewährleistet ist.

Diese Aufgabe wird erfindungsgemäß durch eine Positionsmesseinrichtung mit den Merkmalen des Anspruchs 1 gelöst.

Vorteilhafte Ausführungsformen der erfindungsgemäßen Positionsmesseinrichtung ergeben sich aus den Maßnahmen, die in den abhängigen Ansprüchen aufgeführt sind.

Die erfindungsgemäße Positionsmesseinrichtung zur absoluten Positionsbestimmung besteht aus einem Maßstab sowie einer Abtasteinheit, die relativ zum Maßstab entlang mindestens einer Messrichtung beweglich angeordnet ist. Der Maßstab weist zur Erzeugung eines abtastbaren Signalmusters eine einzige Spur mit einer Messteilung auf, die entlang der Messrichtung ein mit einer Maßstabs-Longitudinalperiode angeordnetes Raster von Streifenelementen umfasst. Die Streifenelemente besitzen zur Absolutpositionscodierung entlang einer Transversalrichtung, die senkrecht zur Messrichtung orientiert ist, eine periodische Struktur mit einer Maßstabs-Transversalperiode, wobei die periodische Struktur in den Streifenelementen aus periodisch mit der Maßstabs-Transversalperiode angeordneten Strukturelementen besteht.

Zur Abtastung des Signalmusters umfasst die Abtasteinheit eine zweidimensionale Detektoranordnung mit einer Mehrzahl von Detektorelementen, die aus mehreren Detektorspalten mit jeweils mehreren Detektorelementen besteht. Die Detektorspalten entlang der Messrichtung und die Detektorelemente entlang der Transversalrichtung sind jeweils periodisch angeordnet. Derart sind aus der Abtastung des Signalmusters mit der Detektoranordnung aus der einzigen Spur der Messteilung mindestens drei periodische, phasenverschobene Teil-Inkrementalsignale bezüglich Relativbewegungen entlang der Messrichtung sowie pro Detektorspalte mindestens ein Absolutpositionssignal erzeugbar. Zur Absolutpositions-Codierung der Streifenelemente dient die Phasenlage der Strukturelemente oder die Maßstabs-Transversalperiode.

Vorzugsweise variiert die Ausdehnung der Strukturelemente in Transversalrichtung entlang der Messrichtung.

Hierbei kann jeweils vorgesehen sein, dass über die AbsolutpositionsCodierung in den Streifenelementen jeweils mindestens zwei unterschiedliche Codewerte erzeugbar sind und über eine Mehrzahl von Codewerten eine Codesequenz ausgebildet ist, die eine Position innerhalb des Messbereichs absolut codiert.

Die Strukturelemente können rautenförmig ausgebildet sein oder zumindest annähernd kosinusförmige Begrenzungskonturen aufweisen.

Es ist ferner möglich, dass der Maßstab in Transversalrichtung benachbart zu den Streifenelementen mindestens eine zusätzliche Messteilungsspur mit einer sich in Messrichtung erstreckenden, hochauflösenden Inkrementalteilung aufweist.

Vorzugsweise erfolgt zur Erzeugung von N periodischen, phasenverschobenen Teil-Inkrementalsignalen eine Abtastung jedes Streifenelements entlang der Messrichtung über mindestens N Detektorspalten, wobei N ≥ 3 gewählt ist.

Hierbei ist es möglich, dass die periodischen, phasenverschobenen Teil-Inkrementalsignale jeweils aus der Aufsummation von Detektorelement-Einzelsignalen jeder Detektorspalte resultieren.

Es kann auch vorgesehen sein, dass die periodischen, phasenverschobenen Teil-Inkrementalsignale jeweils aus der Bestimmung der positionsabhängigen Streuung der Detektorelement-Einzelsignale resultieren.

In einer vorteilhaften Ausführungsform erfolgt zur Erzeugung des mindestens einen Absolutpositionssignals eine Abtastung jedes Strukturelements in Transversalrichtung über mindestens M Zeilen von Detektorelementen der Detektoranordnung, wobei M ≥ 2 gewählt ist.

Hierbei kann vorgesehen sein, dass das mindestens eine Absolutpositionssignal pro Detektorspalte aus der Verrechnung von Detektorelement-Summensignalen resultiert, die jeweils aus der Verschaltung jedes M-ten Detektorelements einer Detektorspalte gebildet sind.

Mit Vorteil ist eine Signalverarbeitungseinheit derart eingerichtet und ausgebildet,

- um aus den periodischen, phasenverschobenen Teil-Inkrementalsignalen eine Inkrementalposition zu bestimmen und
- um für eine Gruppe abgetasteter Streifenelemente jeweils eine Detektorspalte auszuwählen und aus den Absolutpositionssignalen der ausgewählten Detektorspalten und einer abgespeicherten Decodiertabelle eine grobe Absolutposition zu bestimmen und
- um die Inkrementalposition und die grobe Absolutposition zu einer hochaufgelösten Absolutposition zu verrechnen.

Hierbei kann die Signalverarbeitungseinheit ferner dazu eingerichtet und ausgebildet sein, um aus dem Absolutpositionssignal eine Information bezüglich einer Verschiebung von Abtasteinheit und Maßstab in Transversalrichtung und/oder eine Information bezüglich einer Verdrehung von Abtasteinheit und Maßstab um eine senkrecht auf die Messteilungsebene stehende Drehachse zu gewinnen.

In einer möglichen Ausführungsform umfasst die Abtasteinheit ferner eine Lichtquelle, die Detektorelemente sind als optoelektronische Detektorelemente ausgebildet und die Messteilung auf dem Maßstab ist als optisches Amplitudengitter oder als optisches Phasengitter ausgebildet.

Die erfindungsgemäße Positionsmesseinrichtung kann in Verbindung mit verschiedenen Abtastprinzipien eingesetzt werden; neben einer optischen Abtastung ist es auch möglich, magnetische, induktive oder kapazitive Abtastungen vorzusehen. Ebenso kann die erfindungsgemäße Positionsmesseinrichtung sowohl zur Erfassung von linearen als auch zur Erfassung von rotatorischen Relativbewegungen eingesetzt werden.

Als besonders vorteilhaft erweisen sich bei der erfindungsgemäßen Positionsmesseinrichtung des Weiteren die damit erreichbaren großen Anbau- und Betriebstoleranzen. So können damit störende Einflüsse auf die Positionsmessung wie Temperaturänderungen, Exzentrizitätsfehler im Fall rotatorischer Systeme oder aber nicht optimal positionierte Abtast-Komponenten kompensiert werden. Darüber hinaus ist es möglich, neben der primär interessierenden Positionsinformation Zusatzinformationen in Bezug auf die Relativlage von Abtasteinheit und Maßstab zu gewinnen, beispielsweise bzgl. einer eventuell vorliegenden Exzentrizität der Teilscheibe, die im rotatorischen Fall als Maßstab fungiert.

Ferner ist eine lediglich geringe Störung der periodischen Inkrementalsignale durch die Absolutpositions-Codierung sichergestellt. Dadurch können die Inkrementalsignale hoch interpoliert werden, womit eine hohe Auflösung bei der Positionsmessung möglich ist.

Die vorgesehene Einfeld-Abtastung sowohl des periodischen Rasters in Messrichtung als auch der in transversaler Richtung hierzu vorgesehenen Absolutpositions-Codierung gewährleistet ferner eine hohe Unempfindlichkeit bzw. Robustheit gegenüber Verschmutzungen des Maßstabs.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

## KURZE BESCHREIBUNG DER ZEICHNUNGEN

Es zeigt

Figur 1           den Abtaststrahlengang eines ersten Ausführungsbeispiels der erfindungsgemäßen Positionsmesseinrichtung;

Figur 2           eine Draufsicht auf einen Teil des Maßstabs der Vorrichtung aus Figur 1;

Figur 3a          eine Draufsicht auf einen Teil der Detektoranordnung der Vorrichtung aus Figur 1;

Figur 3b          eine Darstellung zur Signalverarbeitung mit Hilfe der Detektoranordnung aus Figur 3a;

Figur 4a - 4f     jeweils verschiedene Darstellungen zur detaillierten Erläuterung der Signalerzeugung im ersten Ausführungsbeispiel;

Figur 5           eine Draufsicht auf einen Teil einer alternativen Maßstabs-Variante, die im ersten Ausführungsbeispiel gemäß Figur 1 zum Einsatz kommen kann;

Figur 6           den Abtaststrahlengang eines zweiten Ausführungsbeispiels der erfindungsgemäßen Positionsmesseinrichtung;

Figur 7           eine Draufsicht auf einen Teil des Maßstabs der Vorrichtung aus Figur 6;

Figur 8a, 8b      je eine Darstellung zur möglichen Erzeugung zusätzlicher Informationen bezüglich der Relativposition von Maßstab und Abtasteinheit;

Figur 9           den Abtaststrahlengang eines dritten Ausführungsbeispiels der erfindungsgemäßen Positionsmesseinrichtung;

Figur 10          den Abtaststrahlengang eines vierten Ausführungsbeispiels der erfindungsgemäßen Positionsmesseinrichtung;

Figur 11          eine Draufsicht auf einen Teil des Maßstabs der Vorrichtung aus Figur 10;

Figur 12          eine Draufsicht auf eine alternative Variante eines geeigneten Maßstabs für die Vorrichtung aus Figur 10;

Figur 13          eine Draufsicht auf einen Teil des Maßstabs eines fünften Ausführungsbeispiels der erfindungsgemäßen Positionsmesseinrichtung, ausgebildet mit einer magnetischen Abtastung;

Figur 14          eine Draufsicht auf einen Teil der Detektoranordnung zur Abtastung des Maßstabs aus Figur 13;

Figur 15          eine Draufsicht auf einen Teil des Maßstabs eines sechsten Ausführungsbeispiels der erfindungsgemäßen Positionsmesseinrichtung, ausgebildet mit einer induktiven Abtastung;

Figur 16          eine Draufsicht auf einen Teil der Detektoranordnung zur Abtastung des Maßstabs aus Figur 15;

## BESCHREIBUNG DER AUSFÜHRUNGSFORMEN

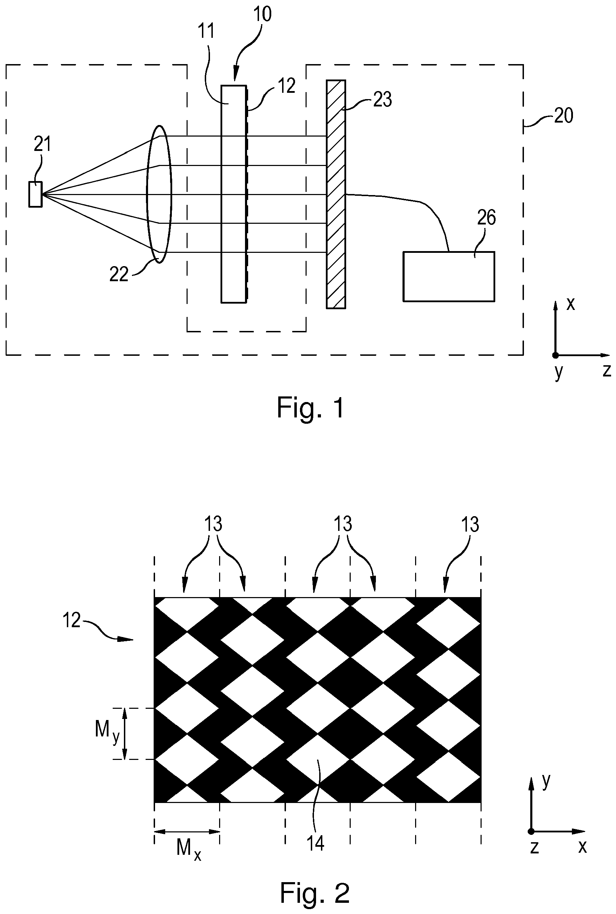

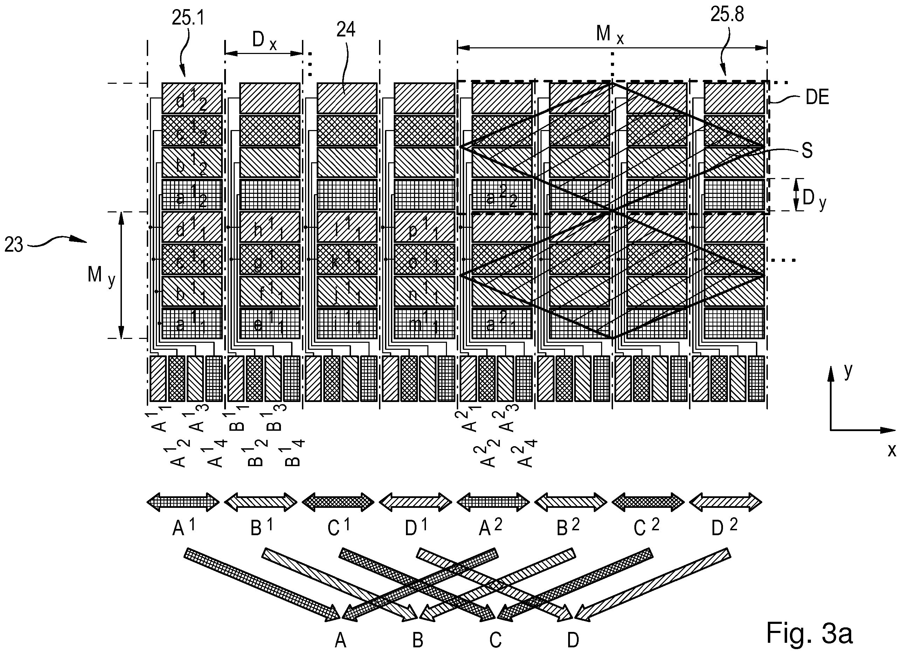

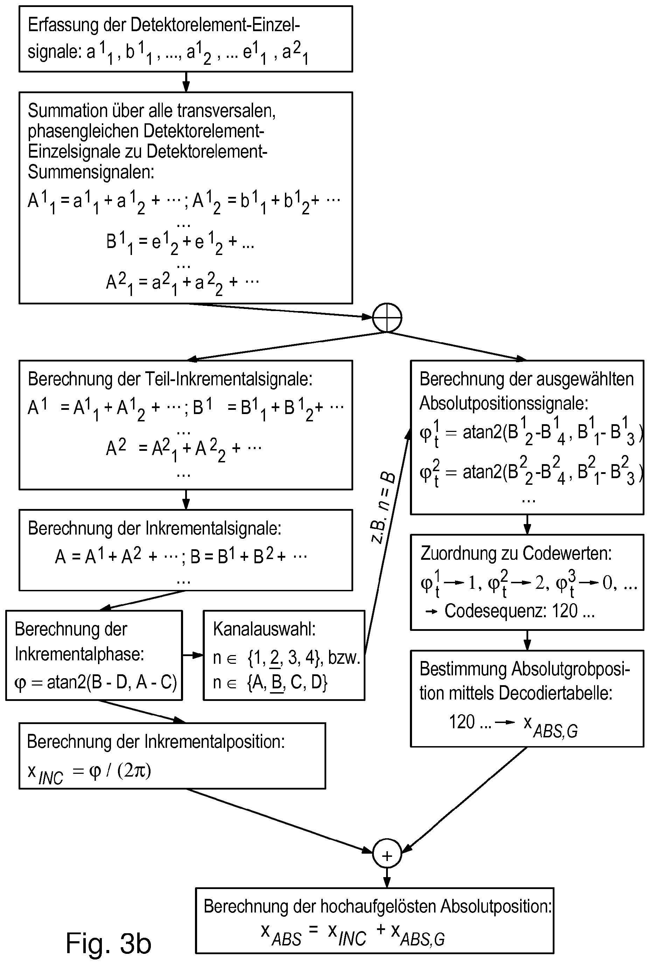

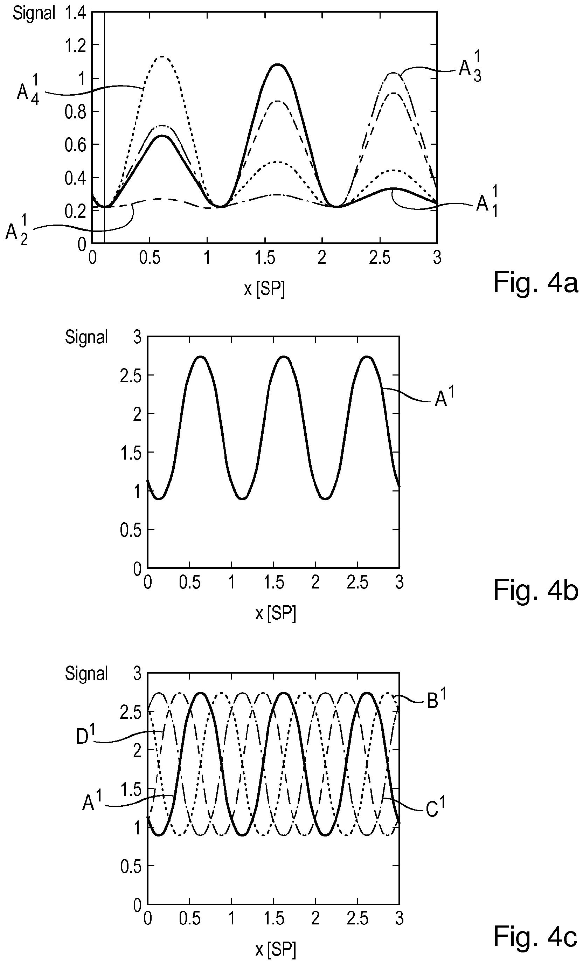

Ein erstes Ausführungsbeispiel der erfindungsgemäßen Positionsmesseinrichtung zur absoluten Positionsbestimmung, ausgebildet als optische Positionsmesseinrichtung, wird nachfolgend anhand der Figuren 1, 2, 3a, 3b sowie 4a - 4f beschrieben. Figur 1 zeigt hierbei in schematischer Form den Abtaststrahlengang, Figur 2 eine Draufsicht auf einen Teil der Messteilung auf dem Maßstab und Figur 3a eine Draufsicht auf einen Teil der Detektoranordnung; mit Hilfe der Figuren 3b sowie 4a - 4f wird eine mögliche Signalverarbeitung erläutert.

Das erste Ausführungsbeispiel der erfindungsgemäßen Positionsmesseinrichtung dient zur absoluten Positionsmessung entlang einer linearen Messrichtung x. Entlang der Messrichtung x sind ein Maßstab 10 und eine Abtasteinheit 20 relativ zueinander beweglich innerhalb einer bestimmten Messstrecke angeordnet. Hierbei kann beispielsweise der Maßstab 10 stationär und die Abtasteinheit 20 beweglich angeordnet sein; ebenso ist auch eine umgekehrte Anordnung möglich. Der Maßstab 10 und die Abtasteinheit 20 sind mit nicht in den Figuren gezeigten Objekten verbunden, die zueinander beweglich angeordnet sind. Bei diesen Objekten kann es sich etwa um Maschinenkomponenten handeln, die entlang der Messrichtung x innerhalb eines bestimmten Messbereichs zueinander verschiebbar sind. Mit Hilfe der erfindungsgemäßen Positionsmesseinrichtung erfolgt die Erzeugung mehrerer positionsabhängiger Signale in Form von mindestens drei periodischen, phasenverschobenen Teil-Inkrementalsignalen $A^1$, $B^1$, $C^1$, ...... bezüglich Relativbewegungen entlang der Messrichtung x sowie von ein oder mehreren Absolutpositionssignalen $\varphi_t^{1,i}$, $\varphi_t^{2,i}$,... . Die erzeugten Signale können zu einer Absolutposition $x_{ABS}$ verrechnet werden, womit dann etwa hochgenau die aktuelle Position der Abtasteinheit 20 entlang der Messstrecke angegeben werden kann. Die derart erzeugte Information bezüglich einer Absolutposition kann dann von einer ebenfalls nicht gezeigten Folgeelektronik weiterverarbeitet werden, beispielsweise von einer Maschinensteuerung zur Positionierung der Maschinenkomponenten.

Alternativ zur Signalverrechnung in der erfindungsgemäßen Positionsmesseinrichtung ist es selbstverständlich auch möglich, die erzeugten positionsabhängigen Signale an die Folgeelektronik zu übertragen und dort zur Absolutposition $x_{ABS}$ zu verrechnen.

Im ersten Ausführungsbeispiel der erfindungsgemäßen Positionsmesseinrichtung ist zur Signalerzeugung ein optisches Abtastprinzip in Form einer Durchlichtabtastung des Maßstabs 10 vorgesehen. Der verwendete Maßstab 10 umfasst einen transparenten Trägerkörper 11, auf dem eine Messteilung 12 angeordnet ist. Die Messteilung 12 ist als optisches Amplitudengitter ausgebildet und weist alternierend angeordnete, lichtdurchlässige und lichtundurchlässige Gitterbereiche auf. Zur detaillierten Beschreibung der verwendeten Messteilung 12 sei auf die nachfolgende Beschreibung insbesondere der Figur 2 verwiesen. In der Abtasteinheit 20 sind auf einer Seite des Maßstabs 10 eine Lichtquelle 21 sowie eine der Lichtquelle 21 in Strahlausbreitungsrichtung vorgeordnete Kollimationsoptik 22 angeordnet. Auf der gegenüberliegenden Seite des Maßstabs 10 ist in der Abtasteinheit 20 eine zweidimensionale Detektoranordnung 23 vorgesehen, die eine Mehrzahl von in Detektorspalten angeordneten optoelektronischen Detektorelementen aufweist. Auch bezüglich Details der Detektoranordnung 23 sei auf die folgende Beschreibung verwiesen, insbesondere auf Figur 3a. Schematisch angedeutet ist in Figur 1 noch eine Signalverarbeitungseinheit 26 dargestellt, die vorliegend in der Abtasteinheit 20 angeordnet ist und die Verarbeitung bzw. Verrechnung der verschiedenen positionsabhängigen Signale, die von der Detektoranordnung 23 erzeugt werden, zur Absolutposition $x_{ABS}$ übernimmt; zu Details der Signalverarbeitung sei auf die nachfolgende Beschreibung verwiesen.

Eine Teil-Draufsicht auf die Messteilung 12 des ersten Ausführungsbeispiels der erfindungsgemäßen Positionsmesseinrichtung ist in Figur 2 gezeigt. Zur Erzeugung eines abtastbaren Signalmusters in der Detektionsebene der Detektoranordnung 23 besitzt die Messteilung 12 entlang der Messrichtung x ein periodisch angeordnetes Raster von Streifenelementen 13; deren Periodizität wird nachfolgend als Maßstabs-Longitudinalperiode $M_x$ bezeichnet.

Die Längsrichtung der einzelnen Streifenelemente 13 in der Messteilung 12 erstreckt sich entlang einer Richtung y, die senkrecht zur Messrichtung x orientiert ist und im Folgenden als Transversalrichtung y bezeichnet wird. Entlang der Transversalrichtung y besitzen die Streifenelemente 13 eine Absolutpositionscodierung, die durch eine periodische Struktur gebildet wird und aus periodisch entlang der Transversalrichtung y angeordneten Strukturelementen 14 besteht. Nachfolgend wird die Periodizität der Strukturelemente 14 entlang der Transversalrichtung y auch als Maßstabs-Transversalperiode $M_y$ bezeichnet. Mit Hilfe der jeweiligen Absolutpositionscodierung eines Streifenelements 13 kann dem entsprechenden Streifenelement 13 ein definierter Codewert, beispielsweise 0 oder 1, zugeordnet werden. Über eine Mehrzahl von aufeinanderfolgenden Codewerten wird auf diese Art und Weise eine Codesequenz ausgebildet, die dann eine Position innerhalb des Messbereichs absolut codiert.

Die in Figur 2 hell dargestellten Strukturelemente 14 sind lichtdurchlässig ausgebildet, die dunkel dargestellten Bereiche der Messteilung 12 sind lichtundurchlässig ausgebildet. In Transversalrichtung y variiert die Ausdehnung der Strukturelemente 14 entlang der Messrichtung x. Dabei nimmt im gezeigten Ausführungsbeispiel deren Transversal-Ausdehnung jeweils von der linken Begrenzung des jeweiligen Streifenelements 13 ausgehend bis zur Mitte des Streifenelements 13 zu und nimmt dann bis zur rechten Begrenzung des jeweiligen Streifenelements 13 wieder ab. Konkret sind im Beispiel der Figur 2 die Strukturelemente 14 rautenförmig ausgebildet, wobei die Ecken der Rauten jeweils in Messrichtung x und in Transversalrichtung y orientiert sind. Die Ausdehnung der rautenförmigen Strukturelemente 14 in Transversalrichtung y variiert in diesem Beispiel damit um 100% zwischen 0 und der Maßstabs-Transversalperiode $M_y$ Gleiches gilt auch für die Ausdehnung der Strukturelemente 14 in Messrichtung x, d.h. die Ausdehnung in Messrichtung x variiert um 100% zwischen 0 und der Maßstabs-Longitudinalperiode $M_x$. Selbstverständlich kann in alternativen Ausführungsbeispielen auch eine geringere Variation der Ausdehnung in Transversalrichtung y und/oder Messrichtung x vorgesehen sein, wobei jeweils grundsätzlich eine Ausdehnungs-Variation größer als 10% vorteilhaft ist.

Aus der Abtastung der derart ausgebildeten Messteilung 12 bzw. des damit erzeugbaren Signalmusters können in Verbindung mit der nachfolgend noch zu erläuternden Detektoranordnung mindestens drei periodische Teil-Inkrementalsignale $A^1$, $B^1$, $C^1$,...... bezüglich Relativbewegungen von Maßstab 10 und Abtasteinheit 20 entlang der Messrichtung x erzeugt werden. Des Weiteren kann aus der Signalmuster-Abtastung in Transversalrichtung y mindestens ein Absolutpositionssignal $\varphi_t^{1,i}$, $\varphi_t^{2,i}$,... pro Detektorspalte gewonnen werden. Die Teil-Inkrementalsignale $A^1$, $B^1$, $C^1$,...... und das mindestens eine Absolutpositionssignal $\varphi_t^{1,i}$, $\varphi_t^{2,i}$,... pro Detektorspalte werden dann zu einer hochauflösenden Absolutposition $x_{ABS}$ verrechnet.

Die bereits oben erwähnte Codierung der Absolutposition $x_{ABS}$ erfolgt im dargestellten Ausführungsbeispiel über die transversale Verschiebung der Streifenelemente 13 entlang der Transversalrichtung y, was aufgrund der periodischen Anordnung der Streifenelemente 13 einer Phasenverschiebung entspricht. Dies bedeutet, dass einer bestimmten Relativverschiebung der Streifenelemente 13 ein definierter Codewert zugeordnet werden kann. Hierbei ist über die Phasenlagen der Streifenelemente 13 mindestens die eindeutige Zuordnung zweier Codewerte vorgesehen. Beispielsweise kann es dabei um die Codewerte 0, 1 eines sich in Messrichtung x erstreckenden Pseudo Random Codes (PRC) handeln; jedem Streifenelement 13 in der Messteilung 12 ist in diesem Fall entweder ein Codewert 0 oder ein Codewert 1 zugeordnet. Eine Mehrzahl derartiger Codewerte von in Messrichtung x aufeinanderfolgenden Streifenelementen 13 bildet dann die Codesequenz bzw. das Codewort, welches eine Position innerhalb des Messbereichs absolut codiert. Zur Decodierung und Bestimmung der Absolutposition aus der Codesequenz wird eine in einem Speicher abgelegte Decodiertabelle (Lookup-Tabelle) verwendet, in der jeder Codesequenz eine bestimmte Absolutposition $x_{ABS}$ eindeutig zugeordnet ist.

Grundsätzlich ist die vorliegende Erfindung nicht auf die Nutzung von Codes mit nur zwei Codewerten beschränkt. Es können über entsprechend gewählte Phasenlagen der Strukturelemente 14 in den Streifenelementen 13 im Bedarfsfall auch mehr als zwei derartige Codewerte erzeugt werden, womit in Bezug auf die Wahl eines geeigneten Codes zur Absolutpositionsbestimmung eine große Flexibilität resultiert. Beispielsweise ist auch die Erzeugung von drei unterschiedlichen Codewerten aus den entsprechend gewählten Phasenlagen der Strukturelemente 14 möglich, wie dies im Ausführungsbeispiel der Figur 2 konkret vorgesehen ist. Dort könnte etwa dem von links aus erstem Streifenelement 13 der Codewert 0 zugeordnet werden, ebenso wie den von links aus dritten und vierten Streifenelementen 13, in denen die Strukturelemente 14 entlang der Transversalrichtung y jeweils ohne relative Phasenverschiebung gegenüber dem ersten Streifenelement 13 angeordnet sind. Dem von links aus zweiten Streifenelement 13, das demgegenüber in Transversalrichtung y verschoben angeordnete Strukturelemente 14 aufweist, könnte der Codewert 1 zugeordnet werden und dem von links aus fünften Streifenelement 13 mit nochmals um einen anderen Betrag entlang der Transversalrichtung verschobenen Strukturelementen 14 der Codewert 2.

Im vorliegenden ersten Ausführungsbeispiel der erfindungsgemäßen Positionsmesseinrichtung wird die wie vorstehend erläutert ausgebildete Messteilung 12 auf dem Maßstab 10 mit kollimiertem Licht beleuchtet. Dadurch wird die Messteilungsstruktur im Schattenwurf als abtastbares Signalmuster S in die Detektionsebene der Detektoranordnung 23 abgebildet bzw. übertragen, die sich in der Abtasteinheit 20 auf der gegenüberliegenden Seite des Maßstabs 10 befindet. Eine Draufsicht auf einen Teil der Detektionsebene in der Detektoranordnung 23 ist in Figur 3 gezeigt; ebenfalls dargestellt ist in der rechten Hälfte der Figur ein Teil des übertragenen Signalmusters S mit der Schattenwurfkontur zweier Strukturelemente der Messteilung. Im vorliegenden Ausführungsbeispiel mit kollimierter Beleuchtung und Schattenwurfabbildung der Messteilungsstruktur besitzt das Signalmuster S in der Detektionsebene entlang der Messrichtung x eine Periodizität $M_x$. Diese Periodizität $M_x$ entspricht der Maßstabs-Longitudinalperiode $M_x$ bzw. der Breite eines Streifenelements 13 der Messteilung 12. Analog hierzu resultiert entlang der Transversalrichtung y eine Periodizität $M_y$ des Signalmusters S, die der Maßstabs-Transversalperiode $M_y$ bzw. der Transversalausdehnung der Strukturelemente 14 der Messteilung 12 entspricht.

Wie aus Figur 3a ersichtlich, ist die Detektoranordnung 23 als zweidimensionale Detektoranordnung bzw. Detektormatrix ausgebildet, die hier aus einer Mehrzahl von optoelektronischen Detektorelementen 24 besteht; als geeignete Detektorelemente fungieren dabei etwa Photodioden. Die einzelnen Detektorelemente 24 sind in der gesamten Detektoranordnung 23 identisch ausgebildet und besitzen im vorliegenden Ausführungsbeispiel jeweils eine rechteckige Form. Die Rechtecks-Längsachse erstreckt sich parallel zur Messrichtung x und die Rechtecks-Querachse parallel zur Transversalrichtung y. Die Detektorelemente 24 liefern aus der Signalmuster-Abtastung Signale, die in den Figuren und der nachfolgenden Beschreibung als Detektorelement-Einzelsignale $a^1_1$, $b^1_1$, ... bezeichnet werden. Diejenigen Detektorelemente 24, die aus der Abtastung des Signalmusters S innerhalb einer Spalte phasengleiche Detektorelement-Einzelsignale $a^1_1$, $b^1_1$, ... liefern, sind in Figur 3a jeweils identisch dargestellt. Da im dargestellten Beispiel jedes vierte transversale Detektorelement 24 phasengleiche Signale liefert, sei in diesem Zusammenhang auch von einer Vierphasen-Abtastung in transversaler Richtung y die Rede.

Die Detektoranordnung 23 der erfindungsgemäßen Vorrichtung umfasst eine Mehrzahl von periodisch entlang der Messrichtung x angeordneten Detektorspalten 25.1 - 25.8, in denen jeweils mehrere Detektorelemente 24 angeordnet sind. Figur 3a zeigt dabei lediglich acht Detektorspalten 25.1 - 25.8 mit jeweils acht darin angeordneten Detektorelementen 24. In der Praxis kann eine entsprechende Detektoranordnung 23 deutlich mehr Detektorspalten 25.1 - 25.8 aufweisen; ebenso können pro Detektorspalte 25.1 - 25.8 natürlich auch mehr als acht Detektorelemente 24 vorgesehen sein.

Die Periodizität der Detektorspalten 25.1 - 25.8 in der Detektoranordnung 23 entlang der Messrichtung x wird in Figur 3a mit $D_x$ bezeichnet; nachfolgend sei in diesem Zusammenhang auch von der Detektor-Longitudinalperiode $D_x$ die Rede. Innerhalb der einzelnen Detektorspalten 25.1 - 25.8 sind die einzelnen Detektorelemente 24 entlang der Transversalrichtung y ebenfalls periodisch angeordnet, nämlich mit der Detektor-Transversalperiode $D_y$.

Wie des Weiteren aus Figur 3a ersichtlich, resultiert die vollständige Detektoranordnung 23 aus der benachbarten Mehrfachanordnung einer rechteckförmigen Detektor-Elementarzelle DE entlang der Messrichtung x und entlang der Transversalrichtung y. Eine Detektor-Elementarzelle DE weist wie in Figur 3a erkennbar im dargestellten Beispiel mit der Schattenwurf-Durchlichtabtastung eine Ausdehnung auf, die zur vollständigen Abtastung der Schattenwurfkontur eines Strukturelements der Messteilung im Signalmuster S geeignet ist. Entlang der Messrichtung x besitzt eine Detektor-Elementarzelle DE damit eine Länge, die der Maßstabs-Longitudinalperiode $M_x$ entspricht, entlang der Transversalrichtung y weist die Detektor-Elementarzelle DE eine Länge auf, die der Maßstabs-Transversalperiode $M_y$ entspricht. In der Teil-Draufsicht auf die Detektoranordnung 23 gemäß Figur 3a sind insgesamt vier derartige Detektor-Elementarzellen DE gezeigt, die entlang der Richtungen x und y jeweils benachbart zueinander angeordnet sind. In einer möglichen Ausführungsform sind beispielsweise 20 Detektor-Elementarzellen DE in Messrichtung x und 4 Detektor-Elementarzellen DE in Transversalrichtung y vorgesehen.

Innerhalb einer Detektor-Elementarzelle DE sind vorliegend N = 4 Detektorelemente 24 periodisch entlang der Messrichtung x sowie M = 4 Detektorelemente 24 periodisch entlang der Transversalrichtung y angeordnet. Die gewählten Werte für N, M ergeben sich aus der Zahl der zu erzeugenden, phasenverschobenen Signale. Grundsätzlich sind Werte für N, M dabei jeweils größer 2 bzw. größer gleich 2 zu wählen, d.h. N > 2 und M ≥ 2; N, M sind dabei nicht notwendigerweise ganzzahlig. Alle Detektor-Elementarzellen DE mit gleicher Position bezüglich der Messrichtung x bilden damit ein Detektorstreifenelement.

Mit Hilfe der derart ausgebildeten Detektoranordnung 23 können über die Abtastung des in der Detektionsebene resultierenden Signalmusters S und die nachfolgende Signalverarbeitung in der Signalverarbeitungseinheit 26 sowohl mindestens drei phasenverschobene Teil-Inkrementalsignale $A^1$, $B^1$, $C^1$, ... wie auch mindestens ein Absolutpositionssignal $\varphi_t^{1,i}$, $\varphi_t^{2,i}$, ... pro Detektorspalte 25.1 - 25.8 erzeugt werden, die dann zu einer hochauflösenden Absolutposition $x_{ABS}$ verrechnet werden können. Dabei bezeichnet $\varphi_t^{j,i}$ das Absolutpositionssignal der j-ten Detektorspalte innerhalb des i-ten Detektorstreifenelements. Ein hierzu geeignetes Vorgehen sei nachfolgend mit Hilfe der Figuren 3a, 3b und 4a - 4f erläutert.

Wie bereits vorstehend erwähnt, liefern die verschiedenphasigen Detektorelemente 24 der Detektoranordnung 23 im Fall einer Relativverschiebung des Maßstabs in Messrichtung x die Detektorelement-Einzelsignale $a^1_1$, $b^1_1$, ..... In Figur 3a ist zumindest einem Teil der dargestellten Detektorelementen 24 das jeweils damit erzeugte Detektorelement-Einzelsignal $a^1_1$, $b^1_1$, ... zugeordnet.

Wie ferner aus Figur 3a ersichtlich, werden in jeder Detektorspalte 25.1 - 25.8 die phasengleichen Detektorelement-Einzelsignale $a^1_1$, $b^1_1$, ... zu insgesamt M = 4 Detektorelement-Summensignalen $A^1_1$, $A^1_2$, $A^1_3$, $A^1_4$,... zusammengeschaltet, d.h. $A^1_1 = \sum_{i=1}^{M} a^1_i$. Der Verlauf der resultierenden M = 4 Detektorelement-Summensignale $A^1_1$, $A^1_2$, $A^1_3$, $A^1_4$ aus der ersten Detektorspalte 25.1 ist beispielhaft in Figur 4a dargestellt.

In jeder Detektorspalte 25.1 - 25.8 werden des Weiteren wie in Figur 3a angedeutet die Detektorelement-Summensignale $A^1_1$, $A^1_2$, $A^1_3$, $A^1_4$, $B^1_1$, $B^1_2$, $B^1_3$, $B^1_4$,... zu Teil-Inkrementalsignalen $A^1$, $B^1$, $C^1$, $D^1$, $A^2$, $B^2$, $C^2$, $D^2$,... aufsummiert, d.h. $A^1 = \sum_{i=1}^{4} A^1_i$. Figur 4b zeigt exemplarisch den Verlauf des Teil-Inkrementalsignals $A^1$, das aus der Aufsummation der Detektorelement-Summensignale $A^1_1$, $A^1_2$, $A^1_3$, $A^1_4$ der ersten Detektorspalte 25.1 und damit aus der Aufsummation aller Detektorelement-Einzelsignale $a^1_1$, $b^1_1$, .. der ersten Detektorspalte 25.1 resultiert. Kennzeichnend für diese Art der Inkrementalsignalgewinnung ist, dass die Teil-Inkrementalsignale $A^1$, $B^1$, $C^1$, $D^1$, $A^2$, $B^2$, $C^2$, $D^2$,... weitestgehend unabhängig von den im Detektorstreifenelement detektierten Absolutpositionssignalen $\varphi_t^{1,i}$, $\varphi_t^{2,i}$, ... sind.

In Figur 4c ist der Verlauf aller vier, um jeweils 90° phasenverschobenen Teil-Inkrementalsignale $A^1$, $B^1$, $C^1$, $D^1$ dargestellt, die derart aus den ersten vier Detektorspalten 25.1 - 25.4 gewonnen werden.

Wie in Figur 3a angedeutet, werden die auf diese Art und Weise gewonnenen Teil-Inkrementalsignale $A^1$, $B^1$,

$C^1$, $D^1$, $A^2$, $B^2$, $C^2$, $D^2$,.... zu vier phasenverschobenen Inkrementalsignalen A, B, C, D verschaltet, die jeweils ebenfalls einen relativen Phasenversatz von 90° zueinander besitzen; d.h. das Inkrementalsignal B ist um 90° phasenversetzt gegenüber dem Inkrementalsignal A, das Inkrementalsignal C ist um 180° phasenversetzt gegenüber dem Inkrementalsignal A und das Inkrementalsignal D ist um 270° phasenversetzt gegenüber dem Inkrementalsignal A. Hierzu werden jeweils alle phasengleichen Teil-Inkrementalsignale $A^1$, $B^1$, $C^1$, $D^1$, $A^2$, $B^2$, $C^2$, $D^2$,... gemäß $A = A^1 + A^2 + ...$, $B = B^1 + B^2 + ...$, ... zu Inkrementalsignalen A, B, C, D aufsummiert.

Aus den derart erzeugten Inkrementalsignalen A, B, C, D wird dann gemäß der Beziehung

$$\varphi = \operatorname{atan2}(B - D, \ A - C)$$

eine Longitudinalphase bzw. eine longitudinale Inkrementalphase $\varphi$ ermittelt. Daraus ergibt sich für die hochauflösende Inkrementalposition $x_{INC}$ innerhalb einer Signalperiode der Wert

$$x_{INC} = \frac{\varphi}{2\,\pi} \ [Signalperioden].$$

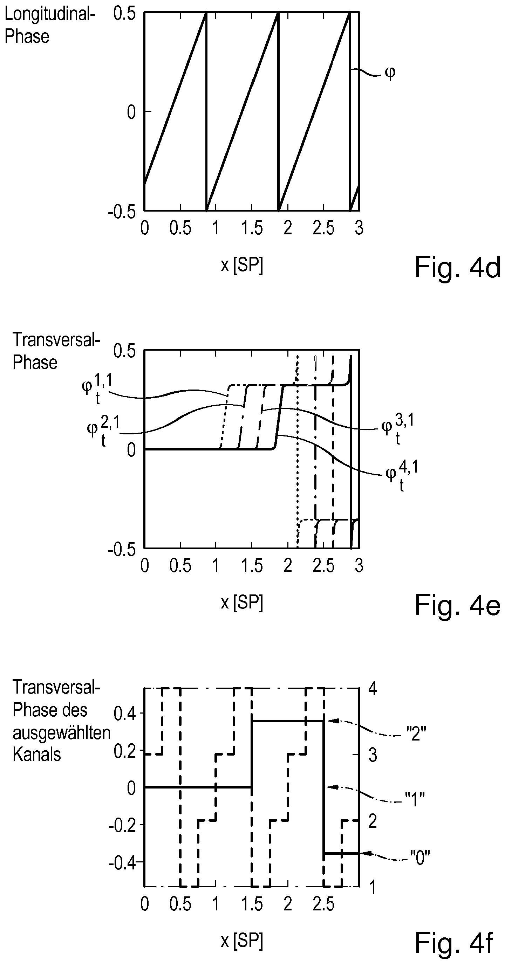

Der Verlauf der longitudinalen Inkrementalphase $\varphi$ ist für den Fall einer Maßstabs-Verschiebung in Messrichtung x in Figur 4d beispielhaft veranschaulicht. Zur besseren Lesbarkeit werden alle Phasenwerte, sowohl longitudinale als auch transversale, in allen Figuren skaliert (analog zur vorstehenden Rechenvorschrift für $x_{INC}$) und in Signalperioden angegeben.

Die Teil-Inkrementalsignale $A^1$, $B^1$, $C^1$, $D^1$, $A^2$, $B^2$, $C^2$, $D^2$,.... können in der erfindungsgemäßen Positionsmesseinrichtung des Weiteren auch auf alternativem Wege zum vorstehend erläuterten Vorgehen gewonnen werden; dieses Verfahren basierte auf einer einfachen Summation über alle transversalen Detektorelement-Summensignale gemäß $A^1 = A^1_1 + A^1_2 + A^1_3 + A^1_4$, $B^1 = B^1_1 + B^1_2 + B^1_3 + B^1_4$,....

Im Rahmen eines alternativen Vorgehens macht man sich zunutze, dass nicht nur die spaltenweise Summe (bzw. der spaltenweise Mittelwert) der Detektorelement-Summensignale eine Periodizität entlang der Messrichtung x besitzt, sondern auch deren Streuung. Zur Veranschaulichung dieses Zusammenhangs sei auf Figur 4a verwiesen, wo z.B. für x = 0.625 sowohl die Summe der vier Signale als auch deren Streuung ein Maximum annimmt. Bei x = 1.125 hingegen ist deren Summe minimal und die Werte sind im Wesentlichen gleich, d.h. die Streuung ist ebenfalls minimal. Als Maß für diese Streuung kann etwa die empirische Standardabweichung oder die Varianz genutzt werden.

Beispielsweise lässt sich das Teil-Inkrementalsignal $A^1$ der ersten Spalte (für alle weiteren Spalten analog) im Falle vierer Detektorelement-Summensignale $A^1_1$, $A^1_2$, $A^1_3$, $A^1_4$ im Rahmen eines derartigen Vorgehens dann folgendermaßen ermitteln:

$$\bar{A} = \left( A^1_1 + A^1_2 + A^1_3 + A^1_4 \right)/4$$

$$A^1 = \sqrt{\left( A^1_1 - \bar{A} \right)^2 + \left( A^1_2 - \bar{A} \right)^2 + \left( A^1_3 - \bar{A} \right)^2 + \left( A^1_4 - \bar{A} \right)^2}$$

Hierbei ist $\bar{A}$ der Mittelwert der Detektorelement-Summensignale und das Teil-Inkrementalsignal $A^1$ entspricht bis auf einen konstanten Faktor der empirischen Standardabweichung.

Natürlich lässt sich das Teil-Inkrementalsignal $A^1$ der ersten Spalte (für alle weiteren Spalten analog) in gleicher oder ähnlicher Weise auch direkt aus den Detektorelement-Einzelsignalen $a^1_1$, $b^1_1$, ... bzw. der positionsabhängigen Streuung der Detektorelement-Einzelsignale $a^1_1$, $b^1_1$, .... der ersten Spalte bestimmen. Im einfachsten Fall sind dafür lediglich die Detektorelement-Summensignale $A^1_1$, $A^1_2$, $A^1_3$, ... jeweils wie im letzten Abschnitt angegeben durch die Summen der Detektorelement-Einzelsignale $a^1_1$, $b^1_1$, ... zu ersetzen.

Grundsätzlich können zur Erzeugung der Teil-Inkrementalsignale A', B', C', $D^1$, $A^2$, $B^2$, $C^2$, $D^2$,.... darüber hinaus auch weitere funktionale Zusammenhänge zwischen den Detektorelement-Summensignalen $A^1_1$, $A^1_2$, $A^1_3$, ... bzw. den Detektorelement-Einzelsignalen $a^1_1$, $b^1_1$, ... und den Teil-Inkrementalsignalen $A^1$, $B^1$, $C^1$, $D^1$, $A^2$, $B^2$, $C^2$, $D^2$,.... genutzt werden.

Vorteilhaft an diesem Verfahren ist, dass die zu errechnenden Werte unter Umständen schon bei der Bestimmung der Transversalphasen, wie im nächsten Abschnitt erläutert, als Zwischenergebnis anfallen und somit bereits zur Weiterverarbeitung vorliegen.

Aus der Verrechnung der derart gewonnenen longitudinalen Inkrementalphase $\varphi$ bzw. der Inkrementalposition

$x_{INC}$ mit einer Absolutgrobposition $x_{ABS,G}$, deren Erzeugung nachfolgend erläutert wird, kann dann die gewünschte hochauflösende Absolutposition $x_{ABS}$ bestimmt werden.

Zur Ermittlung der Absolutgrobposition $x_{ABS,G}$ werden pro Detektorspalte 25.1 - 25.4 die vorliegend vier Detektorelement-Summensignale $A^1_1$, $A^1_2$, $A^1_3$, $A^1_4$ herangezogen, die wie oben erläutert gebildet werden. Aus den Detektorelement-Summensignalen $A^1_1$, $A^1_2$, $A^1_3$, $A^1_4$ bzw. $B^1_1$, $B^1_2$, $B^1_3$,.. wird für jede Spalte dann gemäß den Beziehungen

$$\varphi_t^{1,1} = \mathrm{atan2}(A^1_2 - A^1_4, A^1_1 - A^1_3), \quad \varphi_t^{2,1} = \mathrm{atan2}(B^1_2 - B^1_4, B^1_1 - B^1_3), \ldots$$

ein Absolutpositionssignal $\varphi_t^{1,i}$, $\varphi_t^{2,i}$, ... in Form einer Transversalphase ermittelt. In Figur 4e ist der Verlauf der Absolutpositionssignale $\varphi_t^{1,1}$, $\varphi_t^{2,1}$, $\varphi_t^{3,1}$, $\varphi_t^{4,1}$ aus den von links aus ersten vier Detektorspalten 25.1 - 25.4 beispielhaft im Fall einer Maßstabs-Relativbewegung veranschaulicht. Wie aus dieser Figur ersichtlich, können die derart gebildeten Absolutpositionssignale $\varphi_t^{1,1}$, $\varphi_t^{2,1}$, $\varphi_t^{3,1}$, $\varphi_t^{4,1}$ in jeder Detektorspalte 25.1 - 25.4 in diesem Beispiel jeweils drei diskrete Werte annehmen, die in der erfindungsgemäßen Positionsmesseinrichtung als Codewerte einer absoluten Positionscodierung nutzbar sind. Jedem der über die Detektorspalten 25.1 - 25.8 jeweils abgetasteten Streifenelemente der Messteilung kann damit einer von drei definierten Codewerten 0, 1 oder 2 zugeordnet werden.

Zur Absolutpositionsbestimmung werden in einer vorteilhaften Ausführungsform der erfindungsgemäßen Vorrichtung nicht alle Absolutpositionssignale $\varphi_t^{1,i}$, $\varphi_t^{2,i}$, ... herangezogen, die innerhalb einer Detektorelement-Elementarzelle DE aus den jeweiligen Detektorspalten 25.1 - 25.4 wie beschrieben erzeugt werden. Es wird vielmehr für eine Gruppe abgetasteter Streifenelemente eine Detektorspalte ausgewählt und das aus dieser Detektorspalte resultierende Absolutpositionssignal $\varphi_t^{1,i}$, $\varphi_t^{2,i}$, ... respektive der zugehörige Codewert weiterverwertet. Von den vier benachbarten Detektorspalten 25.1 - 25.4, die ein Streifenelement abtasten, wird dabei vorzugsweise diejenige Detektorspalte 25.1 - 25.4 ausgewählt, die am weitesten vom Übergang zwischen benachbarten Streifen im Signalmuster entfernt liegt. Dafür existiert ein statischer Zusammenhang zwischen der ermittelten longitudinalen Inkrementalphase $\varphi$ (Figur 4d) und der zu wählenden Detektorspalte, im Folgenden auch als Kanal bezeichnet. Alternativ lassen sich auch die Teil-Inkrementalsignale eines Detektorstreifenelements zur Auswahl des passenden Kanals benutzen. Im dargestellten Beispiel der Figuren 4a - 4f gilt beispielsweise: wähle Kanal 1 , falls $0.125 \leq \varphi < 0.375$; Kanal 2, falls $0.375 \leq \varphi < 0.5$ oder $-0.5 \leq \varphi < -0.375$; Kanal 3, falls $-0.375 \leq \varphi < -0.125$; Kanal 4, falls $-0.125 \leq \varphi < 0.125$. Die gestrichelt dargestellte Kurve in Figur 4f (ausgewählter Kanal als Funktion der Maßstabsposition) resultiert damit direkt aus dem in Figur 4d dargestellten Verlauf der Longitudinalphase $\varphi$. Der in Figur 4f durchgezogen dargestellte Transversalphasenwert im ausgewählten Kanal ergibt sich aus der Signaldarstellung in Figur 4e, wovon stückweise die Phase des jeweils ausgewählten Kanals übernommen wird.

Für jedes abgetastete Streifenelement der Messteilung wird aus den jeweils zur Streifenelement-Abtastung vorgesehenen vier Detektorspalten auf diese Art und Weise ein Absolutpositionssignal $\varphi_t^{1,i}$, $\varphi_t^{2,i}$, ... ermittelt und über die entsprechende Detektionskanalwahl jedem Streifenelement einer von vorliegend drei Codewerten 0, 1 oder 2 zugeordnet. Es resultiert eine Codesequenz, der in einer Decodiertabelle eine Absolutgrobposition $x_{ABS,G}$ zugeordnet ist.

Aus der Verrechnung der Inkrementalposition $x_{INC}$ und der Absolutgrobposition $x_{ABS,G}$ lässt sich im Anschluss dann die interessierende hochauflösende Absolutposition $x_{ABS}$ bestimmen.

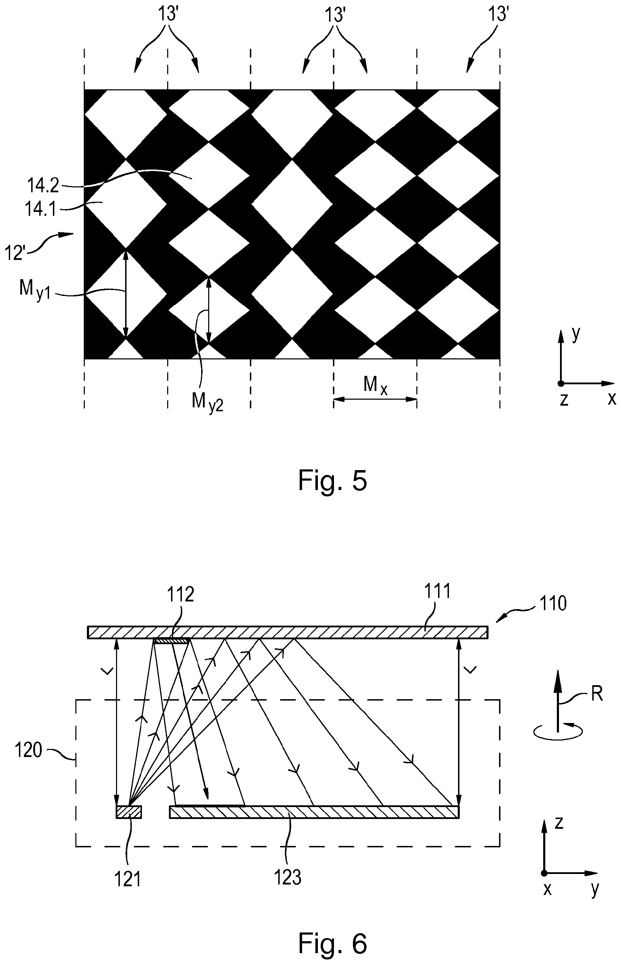

Das vorstehend erläuterte erste Ausführungsbeispiel der erfindungsgemäßen Positionsmesseinrichtung mit optischer Durchlichtabtastung und kollimierter Beleuchtung kann maßstabseitig abgewandelt werden, um insbesondere auf eine alternative Art und Weise die Absolutposition in den Streifenelementen zu codieren. Eine Teil-Draufsicht auf einen entsprechenden alternativen Maßstab bzw. auf eine alternative Messteilung 12' ist in Figur 5 gezeigt.

Während im vorhergehenden Ausführungsbeispiel zur Absolutpositionscodierung die Phasenlage der Strukturelemente in den Streifenelementen der Messteilung in Transversalrichtung y ausgewertet wurde, ist in der vorliegenden Variante gemäß Figur 5 vorgesehen, zur Absolutpositionscodierung die Maßstabs-Transversalperiode $M_y$ heranzuziehen, also die Periodizität der transversal zur Messrichtung x angeordneten Strukturelemente 14' in den Streifenelementen 13'. Hierzu weisen unterschiedlich codierte Streifenelemente 13' der Messteilung 12' mindestens zwei unterschiedliche Maßstabs-Transversalperioden $M_{y1}$, $M_{y2}$ auf. Im dargestellten Beispiel der Figur 3 sind etwa zwei unterschiedliche Maßstabs-Transversalperioden $M_{y1}$, $M_{y2}$ für die in diesen Streifenelementen 13' angeordneten Strukturelemente 14.1, 14.2 vorgesehen. Wie aus Figur 3 ersichtlich, weisen die auch hier wieder rautenförmig ausgebildeten Strukturelemente 14.1, 14.2 dann eine entsprechend unterschiedliche Größe auf. Den unterschiedlichen Maßstabs-Transversalperioden $M_{y1}$, $M_{y2}$ sind dann entsprechend unterschiedliche Codewerte zugeordnet, beispielsweise der Maßstabs-Transversalperiode $M_{y1}$ der Codewert 0 und der Maßstabs-Transversalperiode $M_{y2}$ der Codewert 1.

Zur Abtastung des resultierenden Signalmusters ist die Detektoranordnung aus Figur 3 im Hinblick auf die Transversalabtastung geeignet anzupassen. So muss die Detektor-Elementarzelle in Transversalrichtung y vorzugsweise eine Länge dergestalt aufweisen, dass eine ganzzahlige Anzahl der unterschiedlichen Strukturelemente 14.1, 14.2 aus unterschiedlich codierten Streifenelementen 13' darin angeordnet werden kann.

Die Erzeugung der Teil-Inkrementalsignale erfolgt analog zum vorstehend erläuterten Ausführungsbeispiel.

Die Verrechnung der derart erzeugten Signale zu einer Absolutpositionsinformation $x_{ABS}$ kann dann im Anschluss wie im ersten Ausführungsbeispiel erfolgen.

Als besonderer Vorteil wäre zu diesem Ausführungsbeispiel noch zu erwähnen, dass auch algorithmisch einfachere Auswertungsmethoden verwendbar wären. Zudem lässt sich über die Detektion der Schwebungsfrequenz der beiden zu detektierenden Frequenzen eine größere Verschiebung des Maßstabs in transversaler Richtung absolut erkennen.

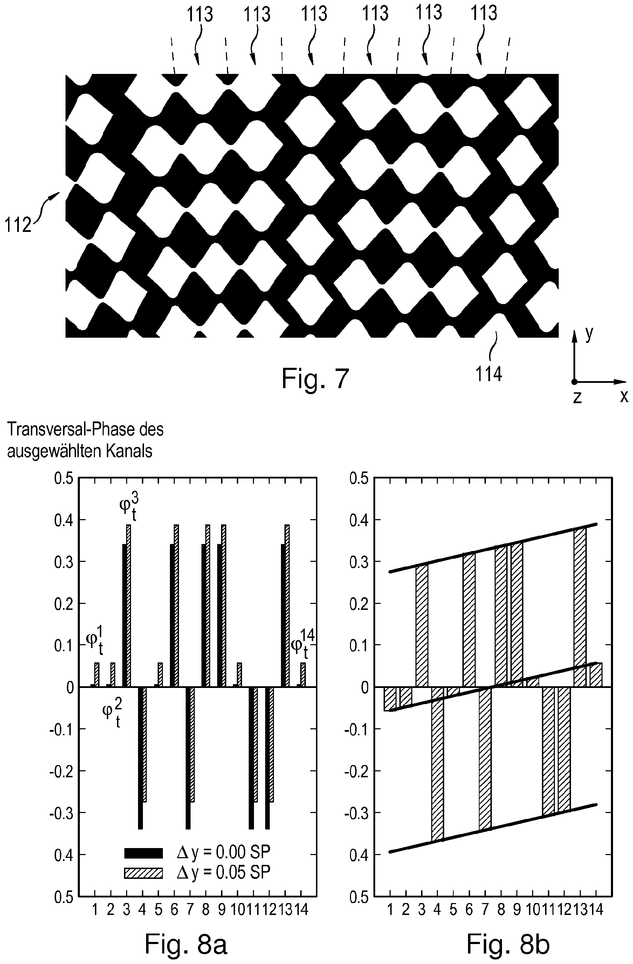

Ein zweites Ausführungsbeispiel der erfindungsgemäßen Positionsmesseinrichtung wird im Folgenden anhand der Figuren 6 und 7 erläutert; Figur 6 zeigt dabei eine schematische Schnittdarstellung mit dem Abtaststrahlengang; Figur 7 eine Teil-Draufsicht auf den Maßstab. Nachfolgend wird ebenso wie in den anschließenden Ausführungsbeispielen lediglich auf die wichtigsten Unterschiede zum ersten Ausführungsbeispiel eingegangen.

Das zweite Ausführungsbeispiel der erfindungsgemäßen Positionsmesseinrichtung ist ebenfalls wieder als optische Positionsmesseinrichtung ausgebildet, wobei nunmehr jedoch eine divergente Auflichtabtastung vorgesehen ist. Des Weiteren dient diese Positionsmesseinrichtung im Unterschied zum ersten Beispiel zur Erfassung von Relativbewegungen von Maßstab 110 und Abtasteinheit 120 um eine Rotationsachse R; die Messrichtung x verläuft demzufolge nicht linear, sondern kreisringförmig. Der Maßstab 110 ist hierbei als sogenannte Teilscheibe ausgebildet, die einen kreisförmigen Trägerkörper 111 umfasst, auf dem sich eine kreisringförmige Messteilung 112 mit radial orientiert angeordneten Gitterbereichen befindet. Die Messteilung 112 ist wiederum als optisches Amplitudengitter ausgebildet, besteht aufgrund des gewählten Abtastprinzips nunmehr aber aus alternierend entlang der Messrichtung x angeordneten Gitterbereichen mit unterschiedlicher Reflektivität, also z.B. aus reflektierenden und nicht-reflektierenden Gitterbereichen. In Figur 7 sind die reflektierenden Gitterbereiche der Messteilung 112 hell dargestellt, die nicht-reflektierenden Gitterbereiche dunkel.

In der Abtasteinheit 120 sind in einer gemeinsamen Ebene sowohl die Lichtquelle 121 als auch die zweidimensionale Detektoranordnung 123 platziert; letztere umfasst wiederum eine Mehrzahl von in Spalten angeordneten optoelektronischen Detektorelementen. Über die Lichtquelle 121 wird ohne vorgeordnete Kollimationsoptik die Messteilung 112 divergent beleuchtet und darüber ein Signalmuster im Schattenwurf in die Detektionsebene der Detektoranordnung 123 übertragen. Aufgrund der divergenten Beleuchtung resultiert eine Vergrößerung des übertragenen Signalmusters in der Detektionsebene um den Vergrößerungsfaktor m, der sich folgendermaßen ergibt:

$$m = (u + v) / u$$

mit:

m := Vergrößerungsfaktor bei der Schattenwurf-Übertragung der Messteilungsstruktur in das abtastbare Signalmuster in der Detektionsebene
u := Abstand zwischen Lichtquelle und Messteilung
v := Abstand zwischen Messteilung und Detektionsebene

Im Fall von u = v resultiert mit der vorstehenden Gleichung etwa ein Vergrößerungsfaktor m = 2.

Wie aus der Draufsicht auf einen Teil der Messteilung 112 in Figur 7 ersichtlich, sind entlang der Messrichtung x wiederum Streifenelemente 113 periodisch angeordnet. Unterschiedlich zum vorhergehenden Ausführungsbeispiel ist hier des Weiteren die Form der reflektierend ausgebildeten Strukturelemente 114 gewählt, die periodisch entlang der Transversalrichtung y in den Streifenelementen 113 angeordnet sind. So sind die Strukturelemente 114 nicht mehr rautenförmig ausgebildet, sondern besitzen annähernd kosinusförmige Begrenzungskonturen. Über derart ausgebildete Begrenzungskonturen lassen sich insbesondere bei den erzeugten Inkrementalpositionssignalen unerwünschte Oberwellenanteile und codeabhängige Fehler verringern, die ansonsten die Signalerzeugung negativ beeinflussen würden. Zur weiteren Verringerung unerwünschter Oberwellen und codeabhängiger Störungen in den erzeugten Signalen kann auch noch die Größe und Form der gewählten Lichtquelle 121 geeignet gewählt werden.

Am Ausführungsbeispiel der rotatorischen Positionsmesseinrichtung sei im Folgenden erläutert, wie die erzeugten Absolutpositionssignale noch zusätzlich genutzt werden können, um Informationen bezüglich einer Verschiebung von Abtasteinheit und Maßstab in Transversalrichtung (Exzentrizitätsfehler) und/oder Informationen bezüglich eines tangentialen Versatzes von Abtasteinheit und Maßstab zu gewinnen.

So zeigt Figur 8a die ausgewählten Absolutpositionssignale $\varphi_t^1$, $\varphi_t^2$, $\varphi_t^3$, ..., die mit Hilfe der Detektoranordnung aus insgesamt 14 benachbarten Detektorstreifenelementen bzw. Detektorspalten gewonnen werden für zwei unterschiedliche Fälle. In einem ersten Fall liegt eine korrekte Anbausituation mit zentrisch exakt positionierter Teilscheibe bzw. Maßverkörperung gegenüber der Abtasteinheit vor; es werden hierbei die jeweils links gezeigten ausgewählten Absolutpositionssignale $\varphi_t^1$, $\varphi_t^2$, $\varphi_t^3$, ... erzeugt. Im zweiten Fall liegt eine Exzentrizität der Teilscheibe bzw. eine nicht-ideale Anbausituation vor; es resultieren die jeweils rechts gezeigten Absolutpositionssignale $\varphi_t^1$, $\varphi_t^2$, $\varphi_t^3$, .... Aus der

gemeinsamen Phasenverschiebung der Absolutpositionssignale $\varphi_t{}^1$, $\varphi_t{}^2$, $\varphi_t{}^3$, ...lässt sich dann eine vorhandene Montage-Exzentrizität $\Delta y$ abschätzen und bei der weiteren Signalverarbeitung berücksichtigen; alternativ kann diese Information auch genutzt werden, um den korrekten Anbau sicherzustellen.

In Figur 8b sind die resultierenden, ausgewählten Absolutpositionssignale $\varphi_t{}^1$, $\varphi_t{}^2$, $\varphi_t{}^3$, ... einer rotatorischen Variante der erfindungsgemäßen Positionsmesseinrichtung gezeigt, die wiederum mit Hilfe der Detektoranordnung aus insgesamt 14 benachbarten Detektorstreifenelementen gewonnen werden. Nunmehr liegt jedoch eine tangentiale Verschiebung der Abtasteinheit relativ zur Teilscheibe vor. Wie aus Figur 8b ersichtlich, hat dies zu Folge, dass sich die Werte der Absolutpositionssignale $\varphi_t{}^1$, $\varphi_t{}^2$, $\varphi_t{}^3$, ... gegenüber der idealen Anbaulage jeweils um einen Wert verschieben, der linear von der Position des detektierten Strukturelements in der jeweiligen Detektorspalte abhängt. Auf diese Art und Weise kann der Versatz bestimmt und korrigiert oder bei der weiteren Messung berücksichtigt werden.

Über die erläuterte Erfassung eines eventuell vorliegenden radialen und tangentialen Versatzes von Abtasteinheit und Teilscheibe ist neben der Kontrolle des korrekten Anbaus auch die frühzeitige Erkennung von Lagerschäden möglich, die sich üblicherweise durch zunehmende Abweichungen von der idealen Anbaulage bemerkbar machen.

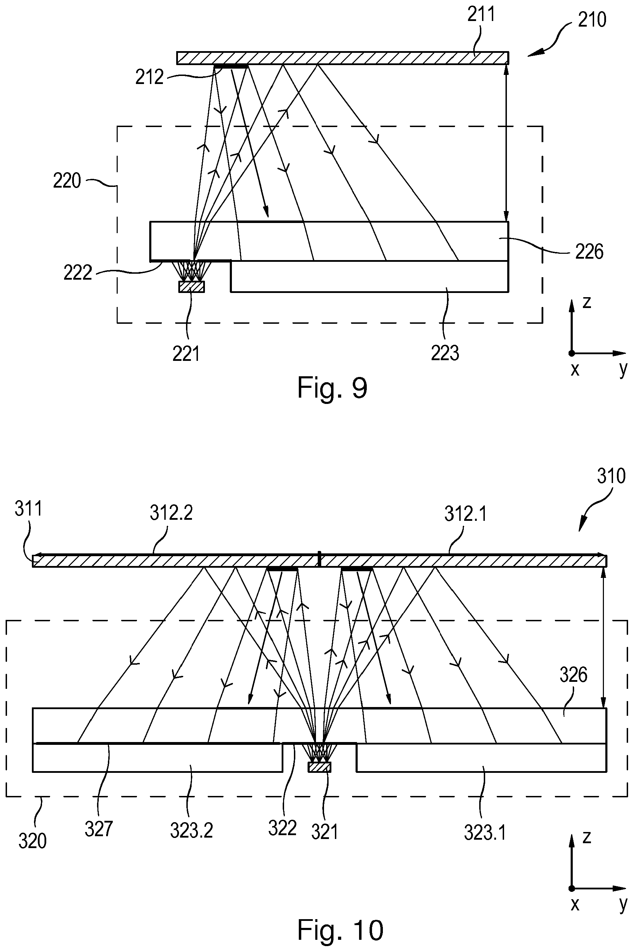

Ein drittes Ausführungsbeispiel der erfindungsgemäßen Positionsmesseinrichtung wird im Folgenden anhand der Figur 9 erläutert, die eine schematische Schnittdarstellung mit dem Abtaststrahlengang zeigt.

Vorgesehen ist hier wiederum eine optische Auflichtabtastung der Messteilung 212; Maßstab 210 und Abtasteinheit 220 sind entlang einer linearen Messrichtung x relativ zueinander verschiebbar. Der Lichtquelle 221 in der Abtasteinheit 220 ist im Unterschied zum vorherigen Ausführungsbeispiel ein Sendegitter 222 vorgeordnet, das hier aus einer in y-Richtung periodischen Anordnung von durchlässigen und undurchlässigen Gitterbereichen besteht. Das Sendegitter 222 ist auf derjenigen Seite einer transparenten Abtastplatte 226 angeordnet, die der Lichtquelle 221 zugeordnet ist. Auf dieser Seite der Abtastplatte 226 ist unmittelbar benachbart auch die Detektoranordnung 223 platziert, womit sichergestellt ist, dass die Sendegitterebene und die Detektionsebene gleichbeabstandet von der Messteilung 212 im Abtaststrahlengang angeordnet sind. Mit Hilfe des im Abtaststrahlengang vorgesehenen Sendegitters 222 können auch feinere Strukturen der Messteilung 212 in die Detektionsebene übertragen werden, als dies ohne Sendegitter 222 möglich wäre. Damit ist eine nochmals höhere Auflösung bei der Positionsbestimmung erzielbar.

Grundsätzlich können auch alternativ ausgebildete Sendegitter-Varianten in der erfindungsgemäßen Positionsmesseinrichtung zum Einsatz kommen. Diese umfassen jeweils lichtundurchlässige Elemente, die ein oder mehrere transparente Öffnungen aufweisen, durch die die von der Lichtquelle kommenden Strahlenbündel in Richtung der nachfolgenden Elemente im Abtaststrahlengang austreten. Die Anzahl und Form der Öffnungen sind dabei auf die jeweilige Abtastung geeignet anzupassen.

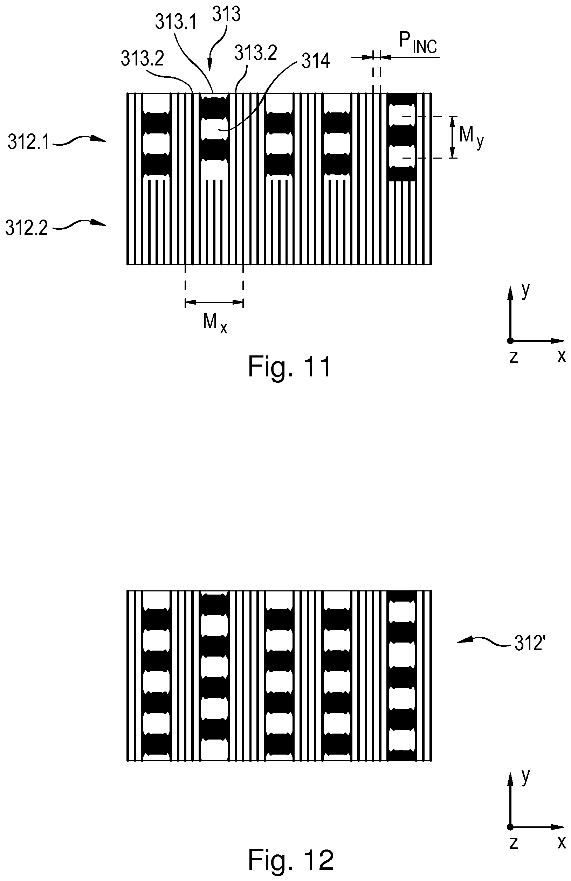

Ein viertes Ausführungsbeispiel der erfindungsgemäßen Positionsmesseinrichtung sowie eine Variante desselbigen wird anhand der Figuren 10, 11 und 12 beschrieben; Figur 10 zeigt eine schematische Schnittdarstellung mit dem Abtaststrahlengang; die Figuren 11 und 12 zeigen Teil-Draufsichten auf verschiedene Varianten von Maßstäben bzw. Messteilungen, die in diesem Ausführungsbeispiel zum Einsatz kommen können.

Wie in den vorhergehenden Beispielen ist eine optische Auflichtabtastung des Maßstabs 310 vorgesehen, wobei Maßstab 310 und Abtasteinheit 320 entlang einer linearen Messrichtung x relativ zueinander verschiebbar sind.

Die auf dem Maßstab 310 angeordnete Messteilung ist in diesem Beispiel als reflektierendes Phasengitter ausgeführt, dessen Gitterbereiche unterschiedliche phasenschiebende Wirkungen auf die darauf einfallenden und reflektierten Strahlenbündel aufweisen. Der Maßstab ist dabei als Mehrspur- bzw. Zweispursystem ausgeführt und weist in Transversalrichtung y benachbart angeordnete erste und zweite Messteilungsspuren 312.1, 312.2 auf, die sich entlang der Messrichtung x erstrecken.

Wie aus der Teil-Draufsicht in Figur 11 ersichtlich, ist in einer ersten Messteilungsspur 312.1 eine periodische Anordnung von Streifenelementen 313 vorgesehen. Die Streifenelemente 313 bestehen dabei im Wesentlichen aus einem zentralen Streifenelement-Bereich 313.1 der Breite $M_x/2$ mit in Transversalrichtung y periodisch angeordneten Strukturelementen 314. Außerdem sind in Messrichtung x seitlich benachbart zum zentralen Streifenelement-Bereich 313.1 jeweils Streifenelement-Bereiche 313.2 der Breite $M_x/4$ mit einem Ablenkgitter angeordnet. Das Ablenkgitter besteht dabei aus einem transversal unstrukturierten Gitter mit der Periodizität $P_A$. Als vorteilhaft erweist sich dabei, wenn die Übergänge wie in Figur 11 angedeutet zwischen beiden Bereichen 313.1, 313.2 möglichst kontinuierlich ausgebildet werden, sodass keine harte Trennung zwischen den in Transversalrichtung y periodischen Bereichen 313.1 und den Ablenkgittern in den Bereichen 313.2 besteht.

In einer zweiten Messteilungsspur 312.2, die in Transversalrichtung y benachbart zur ersten Messteilungsspur 312.1 angeordnet ist, ist eine sich in Messrichtung x erstreckende, hochauflösende Inkrementalteilung vorgesehen. Diese ist analog zum Ablenkgitter in den Streifenelement-Bereichen 313.2 ausgebildet und besitzt eine Periodizität $P_{INC}$ entlang der Messrichtung x. Die Periodizität $P_{INC}$ der Inkrementalteilung kann dabei sowohl identisch als auch abweichend von der Periodizität $P_A$ des Ablenkgitters gewählt werden.

Abtastseitig ist der Lichtquelle 321 in der Abtasteinheit 320 wie im vorherigen Ausführungsbeispiel ein Sendegitter 322 vorgeordnet, welches auch hier wiederum aus einer in y-Richtung periodischen Anordnung von durchlässigen und undurchlässigen Gitterbereichen besteht. Das Sendegitter 322 ist auf der Unterseite einer transparenten Abtastplatte 326 angeordnet, die der Lichtquelle 321 zugeordnet ist. Auf der gleichen Seite der Abtastplatte 326 ist unmittelbar benachbart auch die Detektoranordnung platziert, die vorliegend aus zwei getrennten Teil-Detektoranordnungen 323.1, 323.2 besteht. Der zweiten Teil-Detektoranordnung 323.2 ist hierbei ein Abtastgitter 327 vorgeordnet, das ebenfalls auf der Unterseite der Abtastplatte 326 angeordnet ist.

Auf eine erste Teil-Detektoranordnung 323.1 gelangen diejenigen Strahlenbündel, die am Maßstab von der ersten Messteilungsspur 312.1 zurückreflektiert werden; die zweite Teil-Detektoranordnung 323.2 wird von denjenigen Strahlenbündeln beaufschlagt, die am Maßstab von der zweiten Messteilungsspur 312.2 mit der Inkrementalteilung zurückreflektiert werden. Die zweite Teil-Detektoranordnung 323.2 dient damit zur Erzeugung eines hochauflösenden Inkrementalsignals, während mit Hilfe der ersten Teil-Detektoranordnung 323.1 und der damit erfolgenden Abtastung des ersten Messteilungsbereichs 312.1 analog zu den vorhergehenden Ausführungsbeispielen mindestens ein Absolutpositionssignal sowie mehrere Teil-Inkrementalsignale erzeugbar sind. Die Teil-Inkrementalsignale besitzen hierbei eine geringere Auflösung als das hochauflösende Inkrementalsignal und dienen zur Erzeugung eines sogenannten Anschluss-Inkrementalsignals, das zur Verrechnung der verschiedenen Signale zu einer hochauflösenden Absolutposition vorteilhaft ist.

Aus der Verrechnung des hochauflösenden Inkrementalsignals mit den Teil-Inkrementalsignalen geringerer Auflösung und der aus dem Absolutpositionssignal gewonnenen Absolutgrobposition lässt sich dann in bekannter Art und Weise eine hochaufgelöste Absolutposition bestimmen.

Alternativ zur Messteilung mit den zwei unterschiedlich ausgebildeten Messteilungsbereichen 312.1, 312.2 könnte in diesem Ausführungsbeispiel der erfindungsgemäßen Positionsmesseinrichtung auch ein Maßstab mit einer einzigen Messteilung 312' in Form eines Einspursystems zum Einsatz kommen, von dem eine Teil-Draufsicht in Figur 12 gezeigt ist. Die einzige Spur dieser Messteilung 312' ist hierbei identisch zum ersten Messteilungsbereich 312.1 des Ausführungsbeispiels in Figur 11 ausgebildet.

Detektorseitig kann im Fall einer derartigen Messteilung vorgesehen werden, dass separate Detektoren für die Erzeugung der hochauflösenden Inkrementalsignale einerseits und den Teil-Inkrementalsignalen geringerer Auflösung sowie dem Absolutpositionssignal andererseits genutzt werden. Vorteilhaft an dieser Ausführungsvariante ist insbesondere, dass eine beliebige Montage der Abtasteinheit erfolgen kann, d.h. es sind keine einschränkenden Bedingungen bezüglich Anbautoleranzen in transversaler Richtung zu berücksichtigen. Grundsätzlich ist dabei auch möglich, die Abtasteinheit um 180° verdreht anzuordnen, ohne dass die Funktionsfähigkeit der Positionsmesseinrichtung beeinträchtigt würde.

Ebenfalls realisierbar wäre im Fall einer solchen Messteilung, dass die Abtastung derselbigen mit Hilfe einer einzigen Detektoranordnung erfolgt; hierzu wäre dann noch ein geeignet ausgebildetes Sendegitter im Abtaststrahlengang vorzusehen.

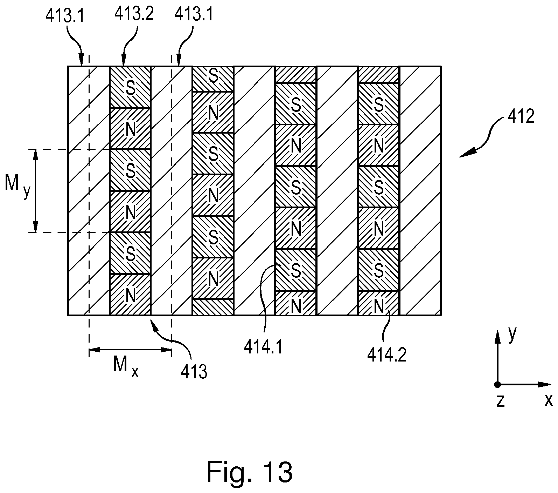

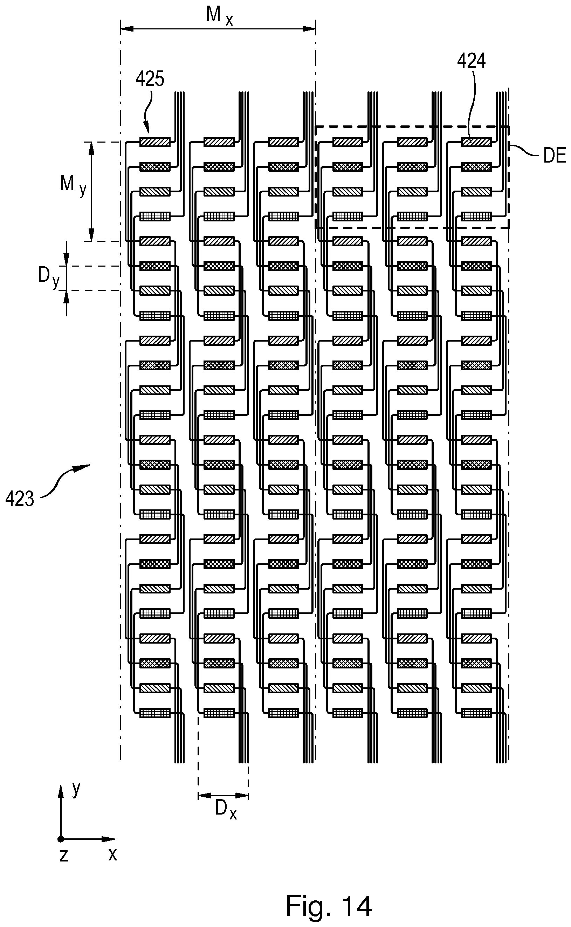

Ein fünftes Ausführungsbeispiel wird im Folgenden anhand der Figuren 13 und 14 erläutert, wobei Figur 13 eine Teil-Draufsicht auf den Maßstab und Figur 14 eine Teil-Draufsicht auf die Detektoranordnung 423 zeigt.

Während in den bislang erläuterten Ausführungsbeispielen ausschließlich optische Abtastprinzipien in der erfindungsgemäßen Positionsmesseinrichtung eingesetzt wurden, ist nunmehr eine magnetische Abtastung des verwendeten Maßstabs vorgesehen. Der Maßstab umfasst hierzu eine magnetische Messteilung 412, die periodisch mit der Maßstabs-Longitudinalperiode $M_x$ in Messrichtung x angeordnete Streifenelemente 413 aufweist. Pro Streifenelement 413 sind dabei unmagnetische oder konstant magnetisierte Bereiche 413.1 mit der Breite $M_x/4$ sowie ein dazwischen angeordneter Bereich 413.2 mit der Breite $M_x/2$ und einer in Transversalrichtung y periodisch magnetisierten Struktur vorgesehen. Die periodische Struktur in Transversalrichtung y wird vorliegend durch alternierend mit der Maßstabs-Transversalperiode $M_y$ angeordnete magnetische Nord- und Südpol-Bereiche 414.1, 414.2 gebildet.

Zur Abtastung des resultierenden Signalmusters in Form einer durch die Messteilung 412 vorgegebenen magnetischen Feldverteilung dient eine zweidimensionale Detektoranordnung 423, deren Detektorelemente 424 als magnetoresistive Detektorelemente ausgebildet sind. Analog zu den optischen Beispielen sind die magnetoresistiven Detektorelemente 424 spaltenweise periodisch entlang der Messrichtung x angeordnet. Pro Detektorspalte 425 ist hierbei eine Mehrzahl periodisch angeordneter Detektorelemente 424 vorgesehen.

Die Signalerzeugung und -verarbeitung erfolgt analog zum ersten erläuterten Ausführungsbeispiel.

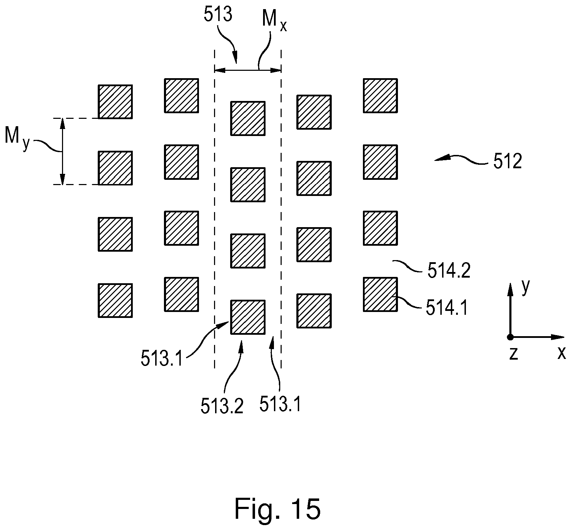

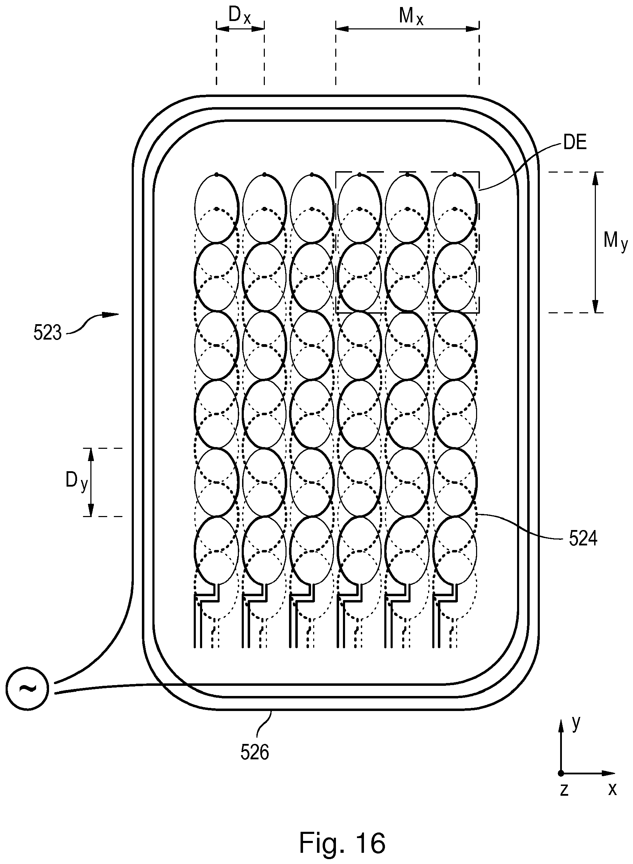

Ein sechstes Ausführungsbeispiel sei abschließend anhand der Figuren 15 und 16 beschrieben. Figur zeigt 15 eine Teil-Draufsicht auf den Maßstab, Figur 16 eine Teil-Draufsicht auf die Detektoranordnung 523.

Vorgesehen ist in diesem Beispiel eine induktive Abtastung des verwendeten Maßstabs. Dieser weist eine induktive Messteilung 512 auf, die periodisch mit der Maßstabs-Longitudinalperiode $M_x$ in Messrichtung x angeordnete Streifenelemente 513 umfasst. Pro Streifenelement 513 sind zwei nicht-leitfähige Bereiche 513.1 mit der Breite $M_x/4$ sowie ein dazwischen angeordneter Bereich 513.2 mit der Breite $M_x/2$ und einer in Transversalrichtung y periodischen Struktur vorgesehen. Die periodische Struktur in Transversalrichtung y wird durch alternierend mit der Maßstabs-Transversalperiode $M_y$ angeordnete elektrisch leitfähige Bereiche 514.1 und nicht-leitfähige Bereiche 514.2 gebildet.

Zur Abtastung des resultierenden Signalmusters in Form einer bestimmten elektrischen Feldverteilung dient eine zweidimensionale Detektoranordnung 523, deren Detektorelemente 524 als elektrisch sensitive Leiterschleifen ausgebildet sind. Analog zu den optischen Beispielen sind die Leiterschleifen bzw. Detektorelemente 524 spaltenweise periodisch mit der Maßstabs-Longitudinalperiode $M_x$ entlang der Messrichtung x angeordnet. Pro Spalte 525 sind eine Mehrzahl periodisch angeordneter Leiterschleifen bzw.

Detektorelemente 524 vorgesehen. Abtastseitig ist in diesem Ausführungsbeispiel ferner eine Erregerspule 526 zur Erzeugung eines oszillierenden elektromagnetischen Erregerfelds vorgesehen.

Die Signalerzeugung und -verarbeitung erfolgt ebenfalls wieder analog zum ersten erläuterten Ausführungsbeispiel.

Neben den konkret beschriebenen Ausführungsbeispielen existieren im Rahmen der vorliegenden Erfindung selbstverständlich noch weitere Ausgestaltungsmöglichkeiten.

## Patentansprüche

1. Positionsmesseinrichtung zur absoluten Positionsbestimmung, bestehend aus einem Maßstab (10; 110; 210; 310) sowie einer Abtasteinheit (20; 120; 220; 320), die relativ zum Maßstab (10; 110; 210; 310) entlang mindestens einer Messrichtung (x) beweglich angeordnet ist, wobei

   - der Maßstab (10; 110; 210; 310) zur Erzeugung eines abtastbaren Signalmusters (S) eine einzige Spur mit einer Messteilung (12; 12'; 112; 212; 312; 312'; 412; 512) aufweist, die entlang der Messrichtung (x) ein mit einer Maßstabs-Longitudinalperiode ($M_x$) angeordnetes Raster von Streifenelementen (13; 13'; 113; 313; 413; 513) umfasst und die Streifenelemente (13; 13'; 113; 313; 413; 513) zur Absolutpositionscodierung entlang einer Transversalrichtung (y), die senkrecht zur Messrichtung (x) orientiert ist, eine periodische Struktur mit einer Maßstabs-Transversalperiode ($M_y$) besitzen, wobei die periodische Struktur in den Streifenelementen (13; 13'; 113; 313; 413; 513) aus periodisch mit der Maßstabs-Transversalperiode ($M_y$) angeordneten Strukturelementen (14; 14'; 14.1, 14.2; 114; 314; 414.1, 414.2; 514.1, 514.2) besteht und
   - die Abtasteinheit (20; 120; 220; 320) zur Abtastung des Signalmusters (S) eine zweidimensionale Detektoranordnung (23; 123; 223; 423; 523) mit einer Mehrzahl von Detektorelementen (24; 424; 524) umfasst, die aus mehreren Detektorspalten (25.1 - 25.8; 425; 525) mit jeweils mehreren Detektorelementen (24; 424; 524) besteht, wobei die Detektorspalten entlang der Messrichtung (x) und die Detektorelemente (24; 424; 524) entlang der Transversalrichtung (y) periodisch angeordnet sind, so dass aus der Abtastung des Signalmusters mit der Detektoranordnung (23; 123; 223; 423; 523) aus der einzigen Spur mit der Messteilung (12; 12'; 112; 212; 312; 312'; 412; 512) sowohl mindestens drei periodische, phasenverschobene Teil-Inkrementalsignale ($A^1$, $B^1$, $C^1$, ....) bezüglich Relativbewegungen entlang der Messrichtung (x) wie auch pro Detektorspalte (25.1 - 25.8; 425; 525) mindestens ein Absolutpositionssignal ($\varphi_t^{1,i}$, $\varphi_t^{2,i}$ ...) erzeugbar sind, und
   - wobei zur Absolutpositions-Codierung der Streifenelemente (13; 13'; 113; 313; 413; 513) die Phasenlage der Strukturelemente (14; 14'; 14.1, 14.2; 114; 314; 414.1, 414.2; 514.1, 514.2) oder die Maßstabs-Transversalperiode ($M_y$) dient.

2. Positionsmesseinrichtung nach Anspruch 1, wobei die Ausdehnung der Strukturelemente (14; 14'; 14.1, 14.2; 114; 314; 414.1, 414.2; 514.1, 514.2) in Transversalrichtung (y) entlang der Messrichtung (x) variiert.

3. Positionsmesseinrichtung nach Anspruch 1, wobei über die Absolutpositions-Codierung in den Streifenelementen (13; 13'; 113; 313; 413; 513) jeweils mindestens zwei unterschiedliche Codewerte erzeugbar sind und über eine Mehrzahl von Codewerten eine Codesequenz ausgebildet ist, die eine Position innerhalb des Messbereichs absolut codiert.

4. Positionsmesseinrichtung nach Anspruch 2, wobei die Strukturelemente (14; 14'; 14.1, 14.2; 114; 314) rautenförmig ausgebildet sind oder zumindest annähernd kosinusförmige Begrenzungskonturen aufweisen.

5. Positionsmesseinrichtung nach mindestens einem der vorhergehenden Ansprüche, wobei der Maßstab (10; 110; 210; 310) in Transversalrichtung (y) benachbart zu den Streifenelementen (13; 13'; 113; 313; 413; 513) mindestens eine zusätzliche Messteilungsspur (312.1, 312.2) mit einer sich in Messrichtung (x) erstreckenden, hochauflösenden Inkrementalteilung aufweist.

6. Positionsmesseinrichtung nach mindestens einem der vorhergehenden Ansprüche, wobei zur Erzeugung von N periodischen, phasenverschobenen Teil-Inkrementalsignalen ($A^1$, $B^1$, $C^1$, ...) eine Abtastung jedes Streifenelements (13; 13'; 113; 313; 413; 513) entlang der Messrichtung (x) über mindestens N Detektorspalten (25.1 - 25.8; 425; 525) erfolgt und $N \geq 3$ gewählt ist.

**7.** Positionsmesseinrichtung nach Anspruch 6, wobei die periodischen, phasenverschobenen Teil-Inkrementalsignale ($A^1$, $B^1$, $C^1$, ...) jeweils aus der Aufsummation von Detektorelement-Einzelsignalen ($a^1_1$, $b^1_1$, ...) jeder Detektorspalte (25.1 - 25.8; 425; 525) resultieren.

**8.** Positionsmesseinrichtung nach Anspruch 6, wobei die periodischen, phasenverschobenen Teil-Inkrementalsignale ($A^1$, $B^1$, $C^1$, ...) jeweils aus der Bestimmung der positionsabhängigen Streuung der Detektorelement-Einzelsignale ($a^1_1$, $b^1_1$, ...) resultieren.

**9.** Positionsmesseinrichtung nach Anspruch 1, wobei zur Erzeugung des mindestens einen Absolutpositionssignals ($\varphi_t^{1,i}$, $\varphi_t^{2,i}$, ...) eine Abtastung jedes Strukturelements (14; 14'; 14.1, 14.2; 114; 314; 414.1, 414.2; 514.1, 514.2) in Transversalrichtung (y) über mindestens M Zeilen von Detektorelementen (24; 424; 524) der Detektoranordnung (23, 123, 223, 423, 523) erfolgt und M $\geq$ 2 gewählt ist.

**10.** Positionsmesseinrichtung nach Anspruch 9, wobei das mindestens eine Absolutpositionssignal ($\varphi_t^{1,i}$, $\varphi_t^{2,i}$ ...) pro Detektorspalte (25.1 - 25.8; 425; 525) aus der Verrechnung von Detektorelement-Summensignalen ($A^1_0$, $A^1_1$, $A^1_2$, $A^1_3$, $BA^1_0$,....) resultiert, die jeweils aus der Verschaltung jedes M-ten Detektorelements (24; 424; 524) einer Detektorspalte (25.1 - 25.8; 425; 525) gebildet sind.

**11.** Positionsmesseinrichtung nach Anspruch 6 und 9, wobei eine Signalverarbeitungseinheit derart eingerichtet und ausgebildet ist,

- um aus den periodischen, phasenverschobenen Teil-Inkrementalsignalen ($A^1$, $B^1$, $C^1$, ...) eine Inkrementalposition ($x_{INC}$) zu bestimmen und
- um für eine Gruppe abgetasteter Streifenelemente (13; 13'; 113; 313; 413; 513) jeweils eine Detektorspalte (25.1 - 25.8; 425; 525) auszuwählen und aus den Absolutpositionssignalen $\varphi_t^{1,i}$, $\varphi_t^{2,i}$, ....) der ausgewählten Detektorspalten (25.1 - 25.8; 425; 525) und einer abgespeicherten Decodiertabelle eine grobe Absolutposition ($x_{ABS,G}$) zu bestimmen und
- um die Inkrementalposition ($x_{INC}$) und die grobe Absolutposition ($x_{ABS,G}$) zu einer hochaufgelösten Absolutposition ($x_{ABS}$) zu verrechnen.

**12.** Positionsmesseinrichtung nach Anspruch 11, wobei die Signalverarbeitungseinheit ferner dazu eingerichtet und ausgebildet ist, um aus dem Absolutpositionssignal ($\varphi_t^{1,i}$, $\varphi_t^{2,i}$, ....) eine Information bezüglich einer Verschiebung von Abtasteinheit (20; 120; 220; 320) und Maßstab (10; 110; 210; 310) in Transversalrichtung (y) und/oder eine Information bezüglich einer Verdrehung von Abtasteinheit (20; 120; 220; 320) und Maßstab (10; 110; 210; 310) um eine senkrecht auf die Messteilungsebene stehende Drehachse zu gewinnen.

**13.** Positionsmesseinrichtung nach mindestens einem der vorhergehenden Ansprüche, wobei die Abtasteinheit (20; 120; 220; 320) ferner eine Lichtquelle (21; 121; 221; 321) umfasst, die Detektorelemente (24) als optoelektronische Detektorelemente ausgebildet sind und die Messteilung (12; 12'; 112; 212; 312; 312') auf dem Maßstab (10; 110; 210; 310) als optisches Amplitudengitter oder als optisches Phasengitter ausgebildet ist.

**Claims**

**1.** Position measurement device for absolute position determination, consisting of a scale (10; 110; 210; 310) and of a scanning unit (20; 120; 220; 320), which is arranged to be movable along at least one measurement direction (x) in relation to the scale (10; 110; 210; 310), wherein

- the scale (10; 110; 210; 310) has, for producing a scannable signal pattern (S), a single track with a measurement graduation (12; 12'; 112; 212; 312; 312'; 412; 512), which comprises along the measurement direction (x) a grid of stripe elements (13; 13'; 113; 313; 413; 513) arranged with a scale longitudinal period ($M_x$), and the stripe elements (13; 13'; 113; 313; 413; 513) have a periodic structure with a scale transverse period ($M_y$) for absolute position encoding along a transverse direction (y) which is oriented perpendicularly to the measurement direction (x), wherein the periodic structure in the stripe elements (13; 13'; 113; 313; 413; 513) consists of structure elements (14; 14'; 14.1, 14.2; 114; 314; 414.1, 414.2; 514.1, 514.2) which are arranged periodically with the scale transverse period ($M_y$), and
- the scanning unit (20; 120; 220; 320) for scanning the signal pattern (S) comprises a two-dimensional detector arrangement (23; 123; 223; 423; 523) having a plurality of detector elements (24; 424; 524), consisting of a plurality of detector columns (25.1-25.8; 425; 525) each having a plurality of detector elements (24; 424; 524), wherein the detector columns are arranged along the measurement direction (x) and the detector elements (24; 424; 524) are arranged periodically along the transverse direction (y) in a manner such that it is possible to produce from the scanning of the signal pattern with the detector arrangement (23; 123; 223; 423; 523) from the single track with the measurement graduation (12; 12'; 112; 212; 312; 312'; 412; 512) both at least three periodic, phase-shifted partial incremental signals ($A^1$, $B^1$, $C^1$,...) with respect to relative movements along the measurement direction (x) and also at least one absolute position signal ($\varphi_t^{1,i}$, $\varphi_t^{2,i}$, ..) per detector column (25.1-25.8; 425; 525), and

- wherein the phase position of the structure elements (14; 14'; 14.1, 14.2; 114; 314; 414.1, 414.2; 514.1, 514.2) or the scale transverse period ($M_y$) serve for absolute position encoding of the stripe elements (13; 13'; 113; 313; 413; 513).

2. Position measurement device according to Claim 1, wherein the extent of the structure elements (14; 14'; 14.1, 14.2; 114; 314; 414.1, 414.2; 514.1, 514.2) in the transverse direction (y) varies along the measurement direction (x).

3. Position measurement device according to Claim 1, wherein in each case at least two different code values are producible via the absolute position encoding in the stripe elements (13; 13'; 113; 313; 413; 513) and a code sequence that absolutely encodes a position within the measurement region is formed via a plurality of code values.

4. Position measurement device according to Claim 2, wherein the structure elements (14; 14'; 14.1, 14.2; 114; 314) are formed in the shape of a diamond or have at least approximately cosine-shaped delimitation contours.

5. Position measurement device according to at least one of the preceding claims, wherein the scale (10; 110; 210; 310) has, in the transverse direction (y) adjacent to the stripe elements (13; 13'; 113; 313; 413; 513), at least one additional measurement graduation track (312.1, 312.2) with a high-resolution incremental graduation extending in the measurement direction (x).

6. Position measurement device according to at least one of the preceding claims, wherein for producing N periodic, phase-shifted partial incremental signals ($A^1$, $B^1$, $C^1$,...), scanning of each stripe element (13; 13'; 113; 313; 413; 513) takes place along the measurement direction (x) over at least N detector columns (25.1-25.8; 425; 525) and N $\geq$ 3 is selected.

7. Position measurement device according to Claim 6, wherein the periodic, phase-shifted partial incremental signals ($A^1$, $B^1$, $C^1$,...) in each case are the result of the summation of detector-element individual signals ($a^1_1$, $b^1_1$,...) of each detector column (25.1-25.8; 425; 525).

8. Position measurement device according to Claim 6, wherein the periodic, phase-shifted partial incremental signals ($A^1$, $B^1$, $C^1$...) are in each case the result of the determination of the position-dependent dispersion of the detector-element individual signals ($a^1_1$, $b^1_1$,...).

9. Position measurement device according to Claim 1, wherein for producing the at least one absolute position signal ($\varphi_t^{1,i}$, $\varphi_t^{2,i}$,...), the scanning of each structure element (14; 14'; 14.1, 14.2; 114; 314; 414.1, 414.2; 514.1, 514.2) takes place in the transverse direction (y) over at least M lines of detector elements (24; 424; 524) of the detector arrangement (23; 123; 223; 423; 523) and M $\geq$ 2 is selected.

10. Position measurement device according to Claim 9, wherein the at least one absolute position signal ($\varphi_t^{1,i}$, ($\varphi_t^{2,i}$,...) per detector column (25.1-25.8; 425; 525) is the result of the computational combination of detector element sum signals ($A^1_0$, $A^1_1$, $A^1_2$, $A^1_3$, $BA^1_0$,...), which are formed in each case from the interconnection of each M-th detector element (24; 424; 524) of a detector column (25.1-25.8; 425; 525).

11. Position measurement device according to Claims 6 and 9, wherein a signal processing unit is set up and configured

- to determine an incremental position ($x_{INC}$) from the periodic, phase-shifted partial incremental signals ($A^1$, $B^1$, $C^1$,...) and
- to select in each case a detector column (25.1-25.8; 425; 525) for a group of scanned stripe elements (13; 13'; 113; 313; 413; 513) and to determine a rough absolute position ($x_{ABS,G}$) from the absolute position signals ($\varphi_t^{1,i}$, ($\varphi_t^{2,i}$,...) of the selected detector columns (25.1-25.8; 425; 525) and a stored decoding table, and
- to computationally combine the incremental position ($x_{INC}$) and the rough absolute position ($x_{ABS,G}$) to obtain a high-resolution absolute position ($x_{ABS}$).

**12.** Position measurement device according to Claim 11, wherein the signal processing unit is furthermore set up and configured to acquire from the absolute position signal ($\varphi_t^{1,i}$, ($\varphi_t^{2,i}$,...) information relating to a displacement of the scanning unit (20; 120; 220; 320) and the scale (10; 110; 210; 310) in the transverse direction (y) and/or information relating to a rotation of the scanning unit (20; 120; 220; 320) and the scale (10; 110; 210; 310) about an axis of rotation that is perpendicular to the measurement graduation plane.

**13.** Position measurement device according to at least one of the preceding claims, wherein the scanning unit (20; 120; 220; 320) furthermore comprises a light source (21; 121; 221; 321), the detector elements (24) are configured in the form of optoelectronic detector elements and the measurement graduation (12; 12'; 112; 212; 312; 312') on the scale (10; 110; 210; 310) is configured as an optical amplitude grating or as an optical phase grating.

## Revendications

**1.** Dispositif de mesure de position destiné à déterminer une position absolue, ledit dispositif comprenant une échelle (10 ; 110 ; 210 ; 310) et une unité de balayage (20 ; 120 ; 220 ; 320) qui est disposée de manière mobile relativement à l'échelle (10 ; 110 ; 210 ; 310) suivant au moins une direction de mesure (x),

- l'échelle (10 ; 110 ; 210 ; 310) comportant, pour générer un motif de signal balayable (S), une piste unique pourvue d'une graduation de mesure (12 ; 12' ; 112 ; 212 ; 312 ; 312' ; 412 ; 512) qui comprend suivant la direction de mesure (x) une grille d'éléments en bande (13 ; 13' ; 113 ; 313 ; 413 ; 513) disposés avec une période d'échelle longitudinale ($M_x$) et les éléments en bande (13 ; 13' ; 113 ; 313 ; 413 ; 513) possédant pour le codage de position absolue suivant une direction transversale (y), qui est orientée perpendiculairement à la direction de mesure (x), une structure périodique ayant une période d'échelle transversale ($M_y$), la structure périodique dans les éléments en bande (13 ; 13' ; 113 ; 313 ; 413 ; 513) comprenant des éléments structuraux (14 ; 14' ; 14.1, 14.2 ; 114 ; 314 ; 414.1, 414.2 ; 514.1, 514.2) disposés périodiquement avec la période d'échelle transversale ($M_y$) et
- l'unité de balayage (20 ; 120 ; 220 ; 320) comprenant, pour balayer le motif de signal (S), un ensemble de détecteurs bidimensionnel (23 ; 123 ; 223 ; 423 ; 523) pourvu d'une pluralité d'éléments détecteurs (24 ; 424 ; 524) qui comprennent plusieurs colonnes de détecteurs (25.1-25.8 ; 425 ; 525) pourvues chacune de plusieurs éléments détecteurs (24 ; 424 ; 524), les colonnes de détecteurs étant disposées périodiquement suivant la direction de mesure (x) et les éléments détecteurs (24 ; 424 ; 524) étant disposés périodiquement suivant la direction transversale (y) de sorte que, à partir du balayage du motif de signal avec l'ensemble de détecteurs (23 ; 123 ; 223 ; 423 ; 523), au moins trois signaux incrémentaux partiels périodiques déphasés ($A^1$, $B^1$, $C^1$,...) concernant des mouvements relatifs suivant la direction de mesure (x) ainsi que, pour chaque colonne de détecteurs (25.1-25.8 ; 425 ; 525), au moins un signal de position absolue ($\varphi_t^{1,i}$, $\varphi_t^{2,i}$,...) puissent être générés à partir de la piste unique pourvue de la graduation de mesure (12 ; 12' ; 112 ; 212 ; 312 ; 312' ; 412 ; 512), et
- la position de phase des éléments structurels (14 ; 14' ; 14.1, 14.2 ; 114 ; 314 ; 414.1, 414.2 ; 514.1, 514.2) ou la période d'échelle transversale (My) servant au codage de position absolue des éléments en bande (13 ; 13' ; 113 ; 313 ; 413 ; 513).

**2.** Dispositif de mesure de position selon la revendication 1, l'étendue des éléments structuraux (14 ; 14' ; 14.1, 14.2 ; 114 ; 314 ; 414.1, 414.2 ; 514.1, 514.2) variant dans la direction transversale (y) suivant la direction de mesure (x).

**3.** Dispositif de mesure de position selon la revendication 1, au moins deux valeurs de code différentes pouvant être générées par le biais du codage de position absolue dans les éléments de bande (13 ; 13' ; 113 ; 313 ; 413 ; 513) et une séquence de code, qui code une position de manière absolument dans la zone de mesure, étant formée par une pluralité de valeurs de code.

**4.** Dispositif de mesure de position selon la revendication 2, les éléments structuraux (14 ; 14' ; 14.1, 14.2 ; 114 ; 314) étant en forme de losange ou présentant des contours de limitation au moins approximativement cosinoïdaux.

**5.** Dispositif de mesure de position selon l'une au moins des revendications précédentes, l'échelle (10 ; 110 ; 210 ; 310) comportant, dans la direction transversale (y) de manière adjacente aux éléments en bande (13 ; 13' ; 113 ; 313 ; 413 ; 513), au moins une piste de graduation de mesure supplémentaire (312.1, 312.2) pourvue d'une graduation incrémentale à haute résolution s'étendant dans la direction de mesure (x).

6. Dispositif de mesure de position selon l'une au moins des revendications précédentes, pour générer N signaux incrémentaux partiels périodiques déphasés ($A^1$, $B^1$, $C^1$,...) un balayage de chaque élément en bande (13 ; 13' ; 113 ; 313 ; 413 ; 513) étant effectué suivant la direction de mesure (x) sur au moins N colonnes de détecteurs (25.1-25.8 ; 425 ; 525) et N étant choisi $\geq$ 3.

7. Dispositif de mesure de position selon la revendication 6, les signaux incrémentaux partiels périodiques déphasés ($A^1$, $B^1$, $C^1$, ...) résultant chacun de la sommation de signaux d'élément détecteur individuels ($a^1_1$, $b^1_1$,...) de chaque colonne de détecteurs (25.1-25.8 ; 425 ; 525).

8. Dispositif de mesure de position selon la revendication 6, les signaux incrémentaux partiels périodiques déphasés ($A^1$, $B^1$, $C^1$, ...) résultant chacun de la détermination de la diffusion, fonction de la position, des signaux d'élément détecteur individuels ($a^1_1$, $b^1_1$,...).

9. Dispositif de mesure de position selon la revendication 1, **caractérisé en ce que**, pour générer l'au moins un signal de position absolue ($\varphi_t^{1,i}$, $\varphi_t^{2,i}$,...), un balayage de chaque élément structurel (14 ; 14' ; 14.1, 14.2 ; 114 ; 314 ; 414.1, 414.2 ; 514.1, 514.2 ) étant effectué dans la direction transversale (y) sur au moins M rangées d'éléments détecteurs (24 ; 424 ; 524) de l'ensemble de détecteurs (23, 123, 223, 423, 523) et M étant choisi $\geq$ 2.

10. Dispositif de mesure de position selon la revendication 9, l'au moins un signal de position absolue ($\varphi_t^{1,i}$, $\varphi_t^{2,i}$,...) par colonne de détecteurs (25.1-25.8 ; 425 ; 525) résultant du calcul de signaux de somme d'éléments détecteurs ($A^1_0$, $A^1_1$, $A^1_2$, $A^1_3$, $BA^1_0$,...) qui sont formés chacun de l'interconnexion de chaque $M^{ième}$ élément détecteur (24 ; 424 ; 524) d'une colonne de détecteurs (25.1-25.8 ; 425 ; 525).

11. Dispositif de mesure de position selon les revendications 6 et 9, une unité de traitement de signal étant adaptée et conçue de manière à

    - déterminer une position incrémentale ($x_{INC}$) à partir des signaux incrémentaux partiels périodiques déphasés ($A^1$, $B^1$, $C^1$,...) et
    - sélectionner une colonne de détecteurs respective (25.1-25.8 ; 425 ; 525) pour un groupe d'éléments en bande balayés (13 ; 13' ; 113 ; 313 ; 413 ; 513) et déterminer une position absolue grossière ($X_{ABS.G}$) à partir des signaux de position absolue ($\varphi_t^{1,i}$, $\varphi_t^{2,i}$,...) des colonnes de détecteurs sélectionnées (25.1-25.8 ; 425 ; 525) et d'une table de décodage mémorisée et
    - calculer la position incrémentale ($x_{INC}$) et la position absolue grossière ($X_{ABS.G}$) par rapport à une position absolue de haute résolution ($x_{ABS}$).

12. Dispositif de mesure de position selon la revendication 11, l'unité de traitement de signal étant en outre adaptée et conçue pour obtenir à partir du signal de position absolue ($\varphi_t^{1,i}$, ($\varphi_t^{2,i}$,...) une information concernant un déplacement de l'unité de balayage (20 ; 120 ; 220 ; 320) et de l'échelle (10 ; 110 ; 210 ; 310) dans la direction transversale (y) et/ou une information concernant une rotation de l'unité de balayage (20 ; 120 ; 220 ; 320) et de l'échelle (10 ; 110 ; 210 ; 310) sur un axe de rotation perpendiculaire au plan de graduation de mesure.

13. Dispositif de mesure de position selon l'une au moins des revendications précédentes, l'unité de balayage (20 ; 120 ; 220 ; 320) comprenant en outre une source de lumière (21 ; 121 ; 221 ; 321) dont les éléments détecteurs (24) sont conçus comme des éléments détecteurs optoélectroniques et la graduation de mesure (12 ; 12' ; 112 ; 212 ; 312 ; 312') sur l'échelle (10 ; 110 ; 210 ; 310) étant conçue comme un réseau d'amplitude optique ou comme un réseau de phase optique.

Fig. 1

Fig. 2

Fig. 3a

Erfassung der Detektorelement-Einzelsignale: $a^1_1$, $b^1_1$, ..., $a^1_2$, ... $e^1_1$, $a^2_1$

Summation über alle transversalen,
phasengleichen Detektorelement-
Einzelsignale zu Detektorelement-
Summensignalen:

$$A^1_1 = a^1_1 + a^1_2 + \cdots ; A^1_2 = b^1_1 + b^1_2 + \cdots$$
$$\cdots$$
$$B^1_1 = e^1_2 + e^1_2 + \ldots$$
$$\cdots$$
$$A^2_1 = a^2_1 + a^2_2 + \cdots$$

Berechnung der Teil-Inkrementalsignale:

$$A^1 = A^1_1 + A^1_2 + \cdots ; B^1 = B^1_1 + B^1_2 + \cdots$$
$$\cdots$$
$$A^2 = A^2_1 + A^2_2 + \cdots$$
$$\cdots$$

Berechnung der ausgewählten
Absolutpositionssignale:

$$\varphi^1_t = atan2(B^1_2 - B^1_4, B^1_1 - B^1_3)$$
$$\varphi^2_t = atan2(B^2_2 - B^2_4, B^2_1 - B^2_3)$$
$$\cdots$$

Berechnung der Inkrementalsignale:

$$A = A^1 + A^2 + \cdots ; B = B^1 + B^2 + \cdots$$
$$\cdots$$

z.B. $n = B$

Zuordnung zu Codewerten:

$$\varphi^1_t \rightarrow 1, \varphi^2_t \rightarrow 2, \varphi^3_t \rightarrow 0, \ldots$$
$$\rightarrow \text{Codesequenz: } 120 \ldots$$

Berechnung der
Inkrementalphase:
$$\varphi = atan2(B - D, A - C)$$

Kanalauswahl:
$$n \in \{1, \underline{2}, 3, 4\}, \text{ bzw.}$$
$$n \in \{A, \underline{B}, C, D\}$$

Bestimmung Absolutgrobposition mittels Decodiertabelle:
$$120 \ldots \rightarrow x_{ABS,G}$$

Berechnung der Inkrementalposition:
$$x_{INC} = \varphi / (2\pi)$$

Berechnung der hochaufgelösten Absolutposition:
$$x_{ABS} = x_{INC} + x_{ABS,G}$$

Fig. 3b

Signal

$A_4^1$

$A_2^1$

$A_3^1$

$A_1^1$

x [SP]

Fig. 4a

Signal

$A^1$

x [SP]

Fig. 4b

Signal

$D^1$

$A^1$

$B^1$

$C^1$

x [SP]

Fig. 4c

Fig. 4d

Fig. 4e

Fig. 4f

Fig. 5

Fig. 6

Fig. 7

Transversal-Phase des
ausgewählten Kanals

Fig. 8a

Fig. 8b

Fig. 9

Fig. 10

Fig. 11

Fig. 12

Fig. 13

Fig. 14

Fig. 15

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2182330 A2
- US 8698892 B2
- DE 102010045355 A1